# EUROPÄISCHE PATENTSCHRIFT

(11) **EP 2 855 923 B1**
(45) Veröffentlichungstag und Bekanntmachung des Hinweises auf die Patenterteilung: **09.11.2016**
(21) Anmeldenummer: 13712669.4
(22) Anmeldetag: 14.03.2013
(51) Int. Cl.: F03B 7/00, F03B 13/00, F03B 17/06

(54) **VORRICHTUNG ZUR GEWINNUNG VON ELEKTRISCHER ENERGIE AUS WASSERKRAFT**
DEVICE FOR OBTAINING ELECTRICAL ENERGY FROM HYDROPOWER
DISPOSITIF DE PRODUCTION D'ÉNERGIE ÉLECTRIQUE À PARTIR D'ÉNERGIE HYDRAULIQUE

(30) Priorität: 24.05.2012 CH 723122012
(43) Veröffentlichungstag der Anmeldung: 08.04.2015
(73) Patentinhaber: WRH Walter Reist Holding AG, 8272 Ermatingen (CH)
(72) Erfinder: WIDMER, Felix, CH-8404 Winterthur (CH)
(74) Vertreter: Frei Patent Attorneys
(86) Internationale Anmeldenummer: PCT/CH2013/000046
(87) Internationale Veröffentlichungsnummer: WO 2013/173933

(56) Entgegenhaltungen:
- EP-A1- 1 980 745
- DE-B- 1 018 000
- FR-A1- 2 613 780
- US-A1- 2005 286 975

## Beschreibung

Die Erfindung betrifft ein Anströmorgan für eine Anlage zur Gewinnung von elektrischer Energie aus Wasserkraft, wobei das Anströmorgan eine Anströmwand mit einer Anströmseite sowie eine, die Anströmwand begrenzende, freie Eintauchkante enthält. Die Anströmwand weist in einer Querschnittesebene quer zur freien Eintauchkante betrachtet eine Krümmung auf.

Die Funktion der Anströmwand liegt darin, dass an dieser die Kopplung der mechanisch nutzbaren Leistung zwischen Anlage und Wasser stattfindet. Der Begriff "Wasser" soll hier stellvertretend für ein flüssiges Medium, insbesondere ein wasserhaltiges, flüssiges Medium stehen, welches sich zur Gewinnung von elektrischer Energie unter Nutzung seiner kinetischen und/oder potentiellen Energie eignet. Der Begriff "Wasser" umfasst insbesondere Trinkwasser, Abwasser, Klärwasser, Brauchwasser sowie Wasser aus Fliessgewässern.

Ferner betrifft die Erfindung eine Anlage zur Gewinnung von elektrischer Energie aus Wasserkraft, enthaltend eine Mehrzahl hintereinander angeordneter und entlang einer Umlaufrichtung in einer geschlossenen Umlaufbahn umlaufend geführten erfindungsgemässen Anströmorgane, welche durch Wasserkraft in Umlaufrichtung antreibbar sind. Ferner enthält die Anlage einen entlang eines Gefälles verlaufenden Lastabschnitt, wobei die Anströmorgane entlang des Lastabschnittes in einem Wasserführungskanal geführt sind.

Es sind eine Vielzahl von Vorrichtungen bekannt, welche das Potentialgefälle von Wasser oder dessen kinetische Energie nutzen, um daraus elektrische Energie zu gewinnen. In diesem Zusammenhang unterscheidet man grundsätzlich zwei Anlagentypen.

Gemäss einem ersten Anlagetyp wird ein Teil der kinetischen Energie des anströmenden Wasser genutzt, um damit einen Generator zur Stromerzeugung anzutreiben. Hierzu sind Anströmorgane, wie Turbinenschaufeln, vorgesehen, welche vom Wasser angeströmt und durch dieses in Bewegung gesetzt werden. Wasserkraftanlagen des ersten Typs finden sich in Flusskraftwerken oder Speicherkraftwerken. Auch das mittel-unterschlächtige Wasserrad wird auf diese Weise betrieben.

Gemäss einem zweiten Anlagentyp wird nicht primär die kinetische Energie des anströmenden Wassers sondern vielmehr dessen frei werdende potentielle Energie während des Durchlaufens eines Potentialgefälles genutzt. Das heisst, gemäss diesem Prinzip treibt die Gravitationskraft des auf Anströmorgan wirkenden Wassers ein Antriebsorgan an. Dieses Prinzip wird beispielsweise beim oberschlächtigen Wasserrad genutzt.

Die EP-A-1 731 756 beschreibt beispielsweise eine Wasserkraftanlage, bei welcher die potentielle Energie von Wasser zur Gewinnung von elektrischer Energie genutzt wird. Die Anlage umfasst eine Wasserkrafteinheit mit einem vertikalen Schacht und einen mit der Wasserkrafteinheit verbundenen Generator. Im Schacht sind an einer Kette befestigte Schaufeln angeordnet, welche ein bestimmtes Volumen Wasser aufnehmen. Durch das auf den Schaufeln lastende Gewicht des Wassers wird die Kette und über diese ein Generator angetrieben. Die Anlage ist jedoch vergleichsweise unflexibel bezüglich ihrer Einsatzmöglichkeiten, da diese nur zusammen mit einem vertikalen Schacht ausführbar ist.

Die WO 2011/041918 beschreibt ebenfalls eine Anlage zur Gewinnung von elektrischer Energie aus Wasserkraft. Diese enthält eine umlaufende Antriebskette mit einem Last- und einem Rücktrum. Die Antriebskette ist in einer Umlaufrichtung um zwei sowohl horizontal als auch vertikal voneinander versetzt angeordnete Umlenkorgane geführt. Die Antriebskette enthält eine Mehrzahl, von in Umlaufrichtung hintereinander angeordnete und voneinander beabstandete Anströmorgane. Die Anströmorgane bilden jeweils Teil eines Kettengliedes der Antriebskette. Die Anströmorgane greifen auf der Seite des Lasttrums in einen geneigten Wasserführungskanal ein und bilden mit den seitlichen Kanalwänden sowie dem Kanalboden Wasseraufnahmeabteile aus. Die einzelnen Wasseraufnahmeabteile nehmen im Einlaufbereich ein bestimmtes Volumen Wasser auf, welches erst im Auslassbereich wieder aus dem Wasseraufnahmeabteil entlassen wird.

Im Weiteren enthält die Anlage einen Generator zur Gewinnung von elektrischer Energie aus der umlaufenden Antriebskette. Das Wasser wird an einem höher gelegenen Einlaufbereich in den Wasserführungskanal eingespiesen, wobei die in den Wasserführungskanal eintauchenden Schaufeln das einfliessende Wasser in den gebildeten Wasseraufnahmeabteilen zurückhalten. Die Schaufeln werden durch die Gewichtskraft des Wassers angetrieben, wodurch das Wasser in den Aufnahmeabteilen entlang des Wasserführungskanals zu einer tiefer gelegenen Auslassöffnung geführt wird.

Die beschriebene Lösung weist den Nachteil auf, dass die Schaufelführung im Wasserführungskanal recht unpräzise ist, so dass die Aufnahmeabteile in Bewegungsrichtung für das mitgeführte Wasser zu durchlässig sind und ein Teil des mitgeführten Wassers ungenützt den Wasserführungskanal zum Auslassbereich hinunter fliesst.

Die Veröffentlichungsschrift US 2005/0286975 A1 beschreibt eine Turbineneinrichtung mit einem beweglich rotierenden ersten Teil bestehend aus einer Mehrzahl von Turbinenschaufeln. Der erste Teil rotiert um eine horizontal gelagerte Drehachse. Die Turbineneinrichtung enthält ferner einen oder mehrere stationäre Teile, welche als Barriere zum Zurückhalten des Wassers dienen.

Es ist Aufgabe vorliegender Erfindung, die Führung der Anströmorgane im Einlaufbereich durch eine besondere geometrische Ausgestaltung derselbigen zu optimieren, um nicht zuletzt den Wirkungsgrad der Anlage zu erhöhen.

Die Aufgabe wird durch die Merkmale der unabhängigen Ansprüche 1 und 8 gelöst. Weitere bevorzugte Ausführungsformen und Weiterbildungen der Erfindung gehen aus den abhängigen Patentansprüchen hervor.

Die Erfindung zeichnet sich dadurch aus, dass die Krümmung derart ausgebildet ist, dass die Anströmwand gegen eine zur Anströmseite hin gerichtete Anströmrichtung gewölbt ausgebildet ist.

Die eingangs genannte Querschnittsebene, auf welche sich die erfindungsgemässe Krümmung des Anströmorgans bezieht, liegt mit Bezug auf die genannte Anlage parallel zur Umlaufrichtung des Anströmorgans.

Die freie Eintauchkante ist hierbei in Anströmrichtung zur Anströmseite hin betrachtet der Anströmwand vorlaufend angeordnet.

Gemäss der erfindung, enthält das Anströmelement Führungsmittel zur Führung des Anströmorgans entlang einer Führungseinrichtung der Anlage. Die Anströmwand umfasst einen, der freien Eintauchkante gegenüber liegenden führungsseitigen Wandendabschnitt. Die freie Eintauchkante ist in Anströmrichtung zur Anströmseite hin betrachtet gegenüber dem führungsseitigen Wandendabschnitt und/oder gegenüber einem zwischen dem führungsseitigen Wandendabschnitt und der freien Eintauchkante angeordneten Wandabschnitt vorlaufend angeordnet.

Auf die weiter unten ausführlich beschriebene Anlage zur Gewinnung von elektrischer Energie aus Wasserkraft bezogen, heisst dies, dass die freie Eintauchkante in Umlaufrichtung R der Anströmorgane betrachtet dem genannten Wandendabschnitt bzw. den genannten Wandabschnitten vorlaufend angeordnet ist.

Bezogen auf die genannte Anlage sind ferner der zweite Wandendabschnitt zur Kanalöffnung hin und die freie Eintauchkante zum Kanalboden hin angeordnet.

Die Krümmung der Anströmwand kann in der besagten Querschnittesebene betrachtet durch einen Polygonzug aus mindestens zwei ebenen, in einem Winkel aufeinander treffenden Wandabschnitten gebildet sein.

Ferner kann die Krümmung der Anströmwand in der besagten Querschnittesebene betrachtet auch durch ein oder mehrere zusammengesetzte Kreisbogenstücke mit jeweils einem Bogenradius gebildet sein. Die die Mittelpunkte der Bogenradien sind dabei in Anströmrichtung zur Anströmseite hin betrachtet der Anströmwand vorlaufend angeordnet.

Eine Kombination von geraden Streckenabschnitten und Kreisbogenstücke in beliebiger Anordnung zur Ausbildung der besagten Krümmung ist ebenfalls möglich.

Die Anströmwand kann aufgrund ihrer Krümmung auch als Schaufel bezeichnet werden. Die Arbeits- bzw. Wirkfläche der Anströmwand, welche der Anströmseite entspricht, liegt jedoch im Gegensatz zu herkömmlichen Turbinenschaufeln nicht auf der konkaven, sondern auf der konvexen Seite der gewölbt ausgebildeten Anströmwand.

Das erfindungsgemässe Anströmorgan ist insbesondere derart ausgebildet und in der genannten Anlage geführt, dass die Anströmwand im Einlaufbereich mit ihrer freien Eintauchkante voran in den Wasserstrom eintaucht.

Die freie Eintauchkante bildet den Abschluss eines freien Wandendabschnittes der Anströmwand aus. Gemäss einer bevorzugten Weiterbildung der Erfindung taucht die Anströmwand im Einlaufbereich mit ihrem freien Wandendabschnitt quer zum Wasserstrom und insbesondere in einem Winkel von 45° bis 90° (Winkelgrad), insbesondere von 70° bis 90° in den Wasserstrom ein. Die Winkelangabe bezieht sich auf die Wasseroberfläche bzw. die Anströmrichtung.

Im Gegensatz zu bekannten Anströmorganen gemäss dem Stand der Technik schlägt das erfindungsgemässe Anströmorgan, aufgrund seiner besonderen Geometrie nicht mehr flächig auf die Wasseroberfläche auf. Der freie Wandendabschnitt bzw. dessen freie Eintauchkante wirken vielmehr als eine Art Schneide, welche beim Eintauchen den Wasserstrom unterbricht oder trennt, bzw. den Wasserstrom portioniert.

Dadurch wird eine höhere Laufruhe der Anlage erreicht, indem das bis anhin bekannte Schlagen des Anströmorgans auf die Wasseroberfläche ausbleibt. Die erfindungsgemässe Anlage erzeugt daher während des Betriebes weniger Erschütterungen und Lärm. Ferner wird auch die Reibung herabgesetzt und dadurch der Wirkungsgrad erhöht.

Damit die wandförmigen Anströmorgane eine genügend hohe Steifigkeit erhalten, um dem Wassergewicht zu widerstehen, weisen diese jeweils bevorzugt wenigstens ein Versteifungselement, auch Verstärkungselement genannt, auf. Bevorzugt weisen die Anströmorgane jeweils wenigstens zwei, aussermittig bzw. seitlich angeordnete Versteifungselemente auf. Die Versteifungselemente sind bevorzugt in einem seitlichen Endbereich der Anströmorgane angeordnet. Die Versteifungselemente können z. B. als Versteifungsrippen oder Versteifungswände bzw. Versteifungsquerwände ausgebildet sein.

Das Versteifungselement ist bevorzugt quer zur Anströmwand angeordnet. Das Versteifungselement ist ferner bevorzugt auf der Anströmseite der Anströmwand angeordnet. Das Versteifungselement ist überdies zweckmässig mit der Anströmwand verbunden. Das Versteifungselement kann über eine Kraft-, Form- oder Stoffschlussverbindung an das Anströmorgan angebracht sein. Eine Kombination der genannten Verbindungsarten ist auch möglich. Das Versteifungselement kann insbesondere gesteckt, geklebt oder verschweisst sein.

Auf die weiter unten ausführlich beschriebene Anlage bezogen weist das Versteifungselement, insbesondere die Versteifungsquerwand bevorzugt eine Ausrichtung parallel zur Anströmrichtung des Wassers, bzw. zur Umlaufrichtung der Anströmorgane bzw. zur Längsrichtung des Wasserführungskanals auf.

Die Versteifungsquerwände können geschlossen oder mit Durchbrüchen versehen sein. Die Versteifungswände können insbesondere auch als offene Fachwerkkonstruktion ausgebildet sein.

Gemäss einer besonders bevorzugten Ausführung der Erfindung enthält das Anströmorgan zwei seitlich aussermittig angeordnete parallel oder im wesentlichen parallel zur Umlaufrichtung des Anströmorgans ausgerichtete Versteifungsquerwände auf. Die Tiefe der Versteifungsquerwände, d.h. die Breite der Versteifungsquerwände Längs zur Umlaufrichtung des Anströmorgans, beträgt bevorzugt mehr als 70%, insbesondere mehr als 80%, und besonders bevorzugt mehr als 90% der Tiefe des Wasseraufnahmeabteils, d.h. der Breite des Wasseraufnahmeabteils Längs zur Umlaufrichtung.

Die Versteifungsquerwände sind bevorzugt relativ nahe, jedoch berührungsfrei zu den seitlichen Kanalwänden angeordnet. So können diese z. B. in einer Distanz von weniger als 10%, insbesondere weniger als 5 % der Kanalbreite zu den Kanalwänden hin angeordnet sein.

Die Versteifungsquerwände üben gemäss dieser Anordnung einen beruhigenden Effekt auf die Wasserführung im Wasseraufnahmeabteil auf. So wird dadurch beispielsweise die Verwirbelung des Wassers im Wasseraufnahmeabteil erheblich reduziert.

Das Anströmorgan enthält gemäss der Erfindung eine an den zweiten Wandendabschnitt der Anströmwand quer zu dieser anschliessende und sich über die Breitenausdehnung der Anströmwand erstreckende Schnittstellenwand. Auf die weiter unten ausführlich beschriebene Anlage bezogen ist die Schnittstellenwand zur Kanalöffnung hin angeordnet. Die Schnittstellenwand verläuft im Lastabschnitt bevorzugt parallel zum Kanalboden.

Gemäss eine bevorzugten Weiterbildung der Erfindung sind die Führungsmittel an der Schnittstellenwand angebracht.

Das Anströmorgan weist eine Breitenausdehnung und eine Höhenausdehnung auf. Die Breitenausdehnung (Ausdehnung des Anströmorgans quer zum Wasserführungskanal) des Anströmorgans ist zweckmässig wesentlich grösser als dessen Höhenausdehnung (Ausdehnung des Anströmorgans entlang der Höhe des Wasserführungskanals). So beträgt das Verhältnis Breite zu Höhe bevorzugt 2:1 oder grösser, und insbesondere 3:1 oder grösser oder sogar 4:1 oder grösser.

Ferner ist die Breitenausdehnung des Anströmorgans bevorzugt wesentlich grösser als die Tiefe der ausgebildeten Wasseraufnahmeabteile (Ausdehnung der Wasseraufnahmeabteile entlang des Wasserführungskanals). So beträgt das Verhältnis Breite zu Höhe bevorzugt 2:1 oder grösser, und insbesondere 3:1 oder grösser oder sogar 4:1 oder grösser.

Dank der angegebenen Längen-Verhältnisse lassen sich bessere Füllergebnisse für die Wasseraufnahmeabteile erreichen. Dies liegt unter anderem daran, dass die Breite des Wasserzulaufs im Einlaufbereich im Vergleich zur Tiefe der auszubildenden Wasseraufnahmeabteile verhältnismässig gross ist, was eine schnelle und entsprechend hohe Befüllung der Wasseraufnahmeabteile zulässt. Die Breite der Anströmorgane kann z. B. rund 1000 mm betragen, während die Tiefe rund 250 mm beträgt.

Ferner enthält das Anströmorgan gemäss einer bevorzugten Weiterbildung der Erfindung Verbindungsmittel zum Verbinden mehrerer Anströmorgane hintereinander zu einer kettenartigen Antriebsanordnung.

Die Verbindungsmittel sind bevorzugt im Bereich der Führungsmittel angeordnet und insbesondere an der Schnittstellenwand angebracht. Gemäss einer besonderen Ausführungsform sind Führungsmittel und Verbindungsmittel funktionstechnisch miteinander kombiniert bzw. gekoppelt.

Die Führungsmittel können Führungsrollen oder Gleitelemente umfassen. Die Gleitelemente können z. B. Gleitschuhe sein. Der Begriff "Rollen" umfasst sämtliche Körper, welche geeignet sind, über eine Oberfläche abzurollen. Darunter fallen z. B. auch Räder, Scheiben und Kugeln.

Gemäss einer besonderen Ausführungsform umfassen die Führungsmittel Führungsrollen, welche an den Verbindungsmitteln angeordnet und über eine Rollenachse mit diesen verbunden sind. Die Rollenachse bildet zugleich das Verbindungselement zwischen zwei Anströmorganen aus.

Die Anströmorgane sind bevorzugt in Leichtbauweise ausgebildet. D.h., die Wandelemente sind bevorzugt dünnwandig ausgebildet. Ferner sind die Anströmorgane bevorzugt aus einem Leichtbauwerkstoff, wie Aluminium oder Kunststoff, insbesondere Faserverbundkunststoff, gefertigt. Die Anströmorgane können auch aus einem Aluminium-Kunststoff-Aluminium-Verbundplattenelement ausgebildet sein. Die Wasserrückhalteorgane können auch aus korrosionsbeständigem Edelstahl bestehen.

Die Anströmorgane sind bevorzugt mehrteilig ausgebildet. So sind die Führungselemente und ggf. Verbindungselemente sowie die Anströmwand ggf. mit ihren Verstärkungsstrukturen bevorzugt als separate Bauteile ausgebildet.

Die Erfindung betrifft im Weiteren eine Anlage zur Gewinnung von elektrischer Energie aus Wasserkraft, enthaltend eine Mehrzahl hintereinander angeordneter und entlang einer Umlaufrichtung in einer geschlossenen Umlaufbahn umlaufend geführten erfindungsgemässen Anströmorgane, welche durch Wasserkraft in Umlaufrichtung antreibbar sind. Ferner enthält die Anlage einen entlang eines Gefälles verlaufenden Lastabschnitt, wobei die Anströmorgane entlang des Lastabschnittes in einem Wasserführungskanal geführt sind.

Gemäss einer ersten Ausführungsvariante enthält die Anlage eine um mindestens zwei voneinander beabstandete Umlenkorgane umlaufende Antriebsanordnung aus einer Mehrzahl in Umlaufrichtung hintereinander angeordneten Anströmorganen. Die Anlage gemäss der ersten Ausführungsvariante enthält wenigstens entlang des Lastabschnitts eine Führungseinrichtung, in welcher die Führungsmittel der Anströmorgane verschiebbar angeordnet sind, derart dass die Anströmorgane wenigstens im Bereich des Lastabschnitts zwischen den beiden Umlenkorganen führbar sind.

Gemäss einer bevorzugten Weiterbildung enthält die Führungseinrichtung wenigstens eine Führungsschiene. Die Führungsmittel enthalten vorzugsweise Laufrollen oder Gleitelemente, welche in der Führungsschiene geführt sind.

Die Anlage enthält im Lastabschnitt einen, entlang des Gefälles bzw. einer Neigung verlaufenden Wasserführungskanal. Die Anströmwände der Anströmorgane verlaufen im Bereich des Lastabschnitts quer zum Wasserführungskanal und greifen in diesen ein. Jeweils zwei in Strömungsrichtung benachbarte Anströmwände bilden zusammen mit seitlichen Kanalwänden ein entlang des Wasserführungskanals mitbewegtes Abteil zur Wasseraufnahme aus. Die Anströmwände, welche in einem Einlaufbereich vom Wasser angeströmt werden, dienen somit auch als Abteiltrennelement. Die Wasseraufnahmeabteile sind nach oben bevorzugt offen.

Die einzelnen Wasseraufnahmeabteile nehmen in Einlaufbereich ein bestimmtes Volumen Wasser auf, welches erst im Auslassbereich wieder aus dem Wasseraufnahmeabteil entlassen wird.

Der Wasserführungskanal, oder auch Rinne genannt, bildet bevorzugt ein U-förmiges Querschnittsprofil mit einem Kanalboden und zwei Kanalseitenwänden aus. Die Anströmorgane sind zweckmässig berührungsfrei im Wasserführungskanal geführt. Der Wasserführungskanal verläuft zwischen dem oberen und unteren Umlenkorgan bevorzugt parallel zu der oder den Führungsschienen.

Gemäss einer bevorzugten Weiterbildung der Erfindung enthalten die Anströmorgane in Umlaufrichtung betrachtet jeweils zwei seitlich angeordnete Führungsmittel. Die Anlage enthält im Lastabschnitt zwei jeweils seitlich am Wasserführungskanal angeordnete Führungsschienen, wobei die Führungsmittel entlang des Lastabschnitts in den Führungsschienen geführt sind.

Die Führungsschiene kann z. B. ein Profillängskörper mit einem Führungskanal zur führenden Aufnahme der Führungsmittel, insbesondere von Laufrollen oder Gleitelementen sein.

Die Führungsschiene bzw. der Führungskanal weist eine Lauffläche für die Führungselemente, z. B. eine Gleitfläche für die Gleitelemente oder eine Abrollfläche für die Laufrollen, auch Führungsrollen genannt, auf.

Der Führungskanal ist bevorzugt so ausgelegt, dass dieser an zwei einander gegenüber liegenden Seiten eine Gleit- bzw. Abrollfläche ausbildet.

Ferner bildet die Führungsschiene bzw. der Führungskanal bevorzugt auch eine quer zur Lauffläche liegende Führungsfläche für die Seitenführungselemente aus.

Der Führungskanal ist bevorzugt U- oder C-förmig ausgebildet und weist z. B. zwei Profilschenkel und eine Verbindungswand auf. Der Führungskanal ist zu den Führungselementen hin offen. Gemäss einer besonderen Ausführungsform ist der Führungskanal zum Wasserführungskanal hin offen.

Einer der Profilschenkel bildet z. B. die Lauffläche der Führungselemente aus. Die Verbindungswand zwischen den zwei Profilschenkeln bildet z. B. die Führungsfläche für das Seitenführungselement aus. Da das Anströmorgan bevorzugt zu beiden Seiten wenigstens ein Führungselement aufweist, ist entsprechend jeweils beidseitig von den Anströmorganen eine Führungsschiene vorgesehen. Diese verlaufen bevorzugt parallel zueinander.

Die Anströmorgane sind bevorzugt über die in den Führungsmitteln geführten Führungselemente zwangsgeführt. Zwangsgeführt bedeutet, dass die Führungselemente über die Führungsmittel, bezogen auf ein dreidimensionales orthogonales oder polares Koordinatensystem, wenigstens in zwei Raumrichtungen geführt sind. Diese zwei Raumrichtungen sind einander bevorzugt entgegen gesetzt.

Da die Position der Anströmorgane relativ zum Wasserführungskanal dank der Zwangsführung durch die Führungsmittel sehr genau festgelegt werden kann, weist die Anströmwand nur geringe Abstände zu den benachbarten Kanalwänden auf. Der Spaltabstand kann z. B. lediglich 1 bis 5 mm, insbesondere lediglich 2 bis 3 mm, betragen.

Die beiden Umlenkorgane sind bevorzugt sowohl horizontal als auch vertikal zueinander versetzt angeordnet.

Ein erstes, oberes Umlenkorgan ist bevorzugt im Einlaufbereich, in welchem das Wasser in den Wasserführungskanal eingelassen wird, angeordnet. Ein zweites, unteres Umlenkorgan ist bevorzugt in einem Auslassbereich angeordnet, in welchem das Wasser aus den Wasseraufnahmeabteilen entlassen wird.

Selbstverständlich können zwischen dem oberen und unteren Umlenkorgan noch weitere Umlenkorgane vorgesehen sein.

Die Anströmorgane werden entlang eines Rückführabschnittes aus dem Auslassbereich in den Einlaufbereich zurückgeführt. Der Rückführabschnitt verläuft bevorzugt oberhalb des Lastabschnittes. Der Rückführabschnitt ist bevorzugt parallel zum Lastabschnitt geführt. Der Rückführabschnitt verläuft überdies oberhalb der Wasserführung.

Das Wasser kann im Einlaufbereich parallel zur Umlaufrichtung, also frontal auf die Anströmwand des Anströmorgans und in den Wasserführungskanal einströmen. Bei gewissen Konfigurationen strömt das Wasser im Einlaufbereich jedoch bevorzugt in Umlaufrichtung betrachtet seitlich schräg an die Anströmwand des Anströmorgans heran und in die Wasseraufnahmeabteile ein. Eine Kombination von frontaler und seitlich schräger Anströmung ist auch möglich.

Die Ausbildung der Antriebsanordnung kann bezüglich des funktionellen Zusammenwirkens zwischen den einzelnen Anströmorganen unterschiedlich sein.

Gemäss einer ersten Ausführungsform der ersten Ausführungsvariante sind die Anströmorgane nicht miteinander verbunden, d.h. verbindungstechnisch unabhängig voneinander ausgebildet.

Die Antriebsanordnung wird gemäss dieser Ausführungsform durch die Übertragung von Druckkräften zwischen den Anströmorganen angetrieben. Die Anströmorgane sind als Druckkörper ausgebildet und enthalten Kraftübertragungsorgane zur Übertragung von Druckkräften von einem in Umlaufrichtung nachlaufenden Anströmorgan auf ein, vorzugsweise unmittelbar, vorlaufendes Anströmorgan.

Die Kraftübertragungsorgane können z. B. Druckflächen ausbilden, über welche die Druckkräfte zwischen den Anströmorganen weiter gegeben werden. Auf diese Weise lässt sich die Antriebsanordnung ähnlich einer Antriebskette in Umlaufrichtung um die Umlenkorgane bewegen, ohne dass jedoch die Anströmorgane miteinander verbunden sind.

Gemäss einer zweiten Ausführungsform der ersten Ausführungsvariante sind die Anströmorgane über die Verbindungsmittel miteinander gelenkig zu einer kettenartig zusammenhängenden Antriebsanordnung verbunden.

Die Antriebsanordnung ist hier als zusammenhängende Antriebsstruktur, ähnlich einer Antriebskette, mit einer Mehrzahl von zusammenhängenden Anströmorganen in Form von Antriebsgliedern, ähnlich den Kettengliedern, ausgebildet. Die Anströmorgane enthalten Verbindungsmittel zum gelenkigen Verbinden benachbarter Anströmorgane zu einer Antriebsstruktur.

Die Anströmorgane der Antriebsstruktur gemäss dieser Ausführungsform können durch Übertragung von Zug-, Druck- oder einer Kombination von Zug- und Druckkräften in Umlaufrichtung angetrieben werden.

Gemäss einer bevorzugten Weiterbildung der Erfindung enthält das Anströmorgan in Umlaufrichtung betrachtet zwei jeweils seitlich aussermittig angeordnete Führungsmittel und gegebenenfalls auch zwei jeweils seitlich aussermittig angeordnete Verbindungsmittel.

Die Führungsmittel dienen zur zwangsweisen Führung des Anströmorgans wenigstens im Bereich des Lastabschnittes entlang des Wasserführungskanals.

Die optionalen Verbindungsmittel dienen zum gelenkigen Verbinden benachbarter Anströmorgane zu einer kettenartigen Antriebsanordnung. Die Anströmorgane sind insbesondere in einer Ebene parallel zur Bewegungsrichtung bzw. Umlaufbahn der Antriebsstruktur schwenkbar miteinander verbunden.

Gemäss einer besonders bevorzugten Ausführung der Erfindung sind die Führungsmittel und die Verbindungsmittel funktionstechnisch miteinander gekoppelt. So können die Führungsmittel Führungsrollen umfassen, welche über Rollenachsen drehbar am Anströmorgan gelagert sind. Die Rollenachse dient gleichzeitig als Verbindungsachse zwischen zwei benachbarten Anströmorganen. Verbindungsachse und Rollenachse können jedoch auch als unabhängige Bauteile ausgebildet sein

Gemäss einer besonderen Ausführungsform von Verbindungsmitteln weist das Anströmorgan jeweils auf jeder Seite ein gabelförmiges Aufnahmeelement mit Gabellaschen auf, welche Durchbrüche zum Durchführen einer Verbindungsachse enthalten. Ferner enthält das Anströmorgan einen entlang der Bewegungsrichtung dem gabelförmigen Aufnahmeelement gegenüber liegenden Aufnahmekörper, z. B. in Form einer Lasche, mit einem Durchbruch zum Durchführen der Verbindungsachse auf.

Zur Herstellung der Verbindung zwischen zwei Anströmorganen wird nun auf beiden Seiten des Anströmorgans der Aufnahmekörper zwischen die Gabellaschen des gabelförmigen Aufnahmeelements des benachbarten Anströmorgans geschoben und die Verbindungsachse durch die Durchbrüche in den Gabellaschen und dem Aufnahmekörper geschoben. Die Verbindungsachse kann wie bereits erwähnt der Rollenachse entsprechen.

Die Führungselemente, insbesondere die Führungsrollen, sind in Umlaufrichtung betrachtet bevorzugt jeweils ausserhalb des seitlichen Endes des Anströmorgans angeordnet. Die Führungselemente weisen ferner bevorzugt jeweils ein seitlich nach aussen zur Führungsschiene hin gerichtetes Seitenführungselement auf. Die Anströmorgane sind über die Seitenführungselemente beidseitig quer zum Wasserführungskanal geführt.

Das Seitenführungselement ist bevorzugt kalottenförmig bzw. als Führungskappe ausgebildet, und steht in einem Führungskontakt mit der Führungsschiene.

Gemäss einer besonderen Ausführungsvariante der Erfindung werden die Umlenkorgane durch Bogenabschnitte der Führungsschienen ausgebildet, welche die Führungsschiene im Last- und Rückführabschnitt miteinander verbinden. Auf diese Weise sind die Anströmorgane auch im Umlenkbereich durch die Führungsschienen zwangsgeführt. Die Bogenstücke der Führungsschienen können auch Teil des Umlenkorgans sein, welches z. B. noch wie weiter unten beschrieben einen Drehkörper mit umfassen kann.

Werden zum Wasserführungskanal hin offene U- oder C-Führungsprofile verwendet, so weisen diese zwei einander gegenüber liegende Führungsflächen für die Führungselemente auf. Dadurch können die Anströmorgane im Bereich des Lastabschnittes nicht durch den Wasserdruck nach oben weggedrückt bzw. angehoben werden.

Gemäss einer bevorzugten Weiterbildung der Erfindung enthält eines der Umlenkorgane, insbesondere das obere, im Einlaufbereich angeordnete Umlenkorgan, einen Drehkörper, insbesondere ein Antriebsrad, welches durch die Bewegung der teilumfänglich um den Drehkörper geführten Antriebsanordnung angetrieben wird. Die Antriebsanordnung steht z. B. in einem teilumfänglichen form- und/oder reibschlüssigen Eingriff mit dem Drehkörper, so dass dieser durch die Antriebsanordnung z. B. mit der Geschwindigkeit der Antriebsanordnung, angetrieben wird.

Wird das Umlenkorgan durch die Führungsschiene selbst ausgebildet, so ist der oben genannte sowie nachfolgend beschriebene Drehkörper dem Umlenkorgan zugeordnet. Drehkörper und Führungsschiene können auch definitionsgemäss gemeinsam das Umlenkorgan ausbilden, da beide Einrichtungen an der Umlenkung der Antriebsanordnung beteiligt sind.

Das Antriebsrad des Umlenkorgans weist z.B. entlang seines Umfanges angeordnete Antriebsvertiefungen auf, in welche Elemente der Anströmorgane eingreifen und auf diese Weise das Antriebsrad antreiben. Diese Elemente können Verbindungselemente von Antriebsgliedern oder Rollenachsen von Führungsrollen sein.

Das besagte Umlenkorgan ist beispielsweise mit dem Stromerzeugungsgenerator gekoppelt. Der Generator kann direkt an die Drehachse des Drehkörpers gekoppelt sein. Ferner kann die Drehbewegung auch über ein Getriebe vom Drehkörper an den Generator übertragen werden.

Der mit dem oberen Umlenkorgan gekoppelte Stromerzeugungsgenerator wird dabei durch die Druck- und/oder Zugkraft der Anströmorgane, insbesondere der Antriebsglieder angetrieben.

Der Stromerzeugungsgenerator kann auch Teil eines Schleppantriebes sein, bei welchem die Antriebsanordnung bzw. die bewegten Anströmorgane im Lastabschnitt ein umlaufendes, flexibles Kraftübertragungsorgan antreiben, welches wiederum den Stromerzeugungsgenerator antreibt.

Gemäss einer besonderen Ausführungsform der Erfindung weist jenes Umlenkorgan, welchem kein Stromerzeugungsgenerator zugeordnet ist oder beide Umlenkorgane beidseitig von den Anströmorganen angeordnete kurvenförmig verlaufende Führungsschienen auf, in welchen die Anströmorgane über ihre Führungselemente zwangsgeführt und aus dem Lastabschnitt in den Rückführabschnitt oder umgekehrt umgelenkt werden.

Gemäss einer besonderen Ausführungsform der Erfindung sind die Anströmorgane über ihre Führungselemente entlang der gesamten Umlaufbahn in Führungsschienen zwangsgeführt. Das heisst, die Anlage weist entlang der Umlaufbahn der Antriebsanordnung eine geschlossene Zwangsführung für die Anströmorgane auf. Die geschlossene Zwangsführung kommt insbesondere bei Antriebsanordnungen zur Anwendung, bei denen die Anströmorgane nicht miteinander verbunden, d.h. nicht miteinander verkettet sind.

Diese Ausführungsform weist den Vorteil auf, dass keine Kette aus miteinander verbundenen Anströmorganen gespannt werden muss.

Das untere, dem Auslassbereich zugeordnete Umlenkorgan enthält bevorzugt kurvenförmig verlaufende Führungsschienen. Der bogenförmige Verlauf der Führungsprofile umfasst bevorzugt einen vom Lastabschnitt bzw. Rückführabschnitt in das Umlenkorgan einlaufenden Übergangsbogen, welcher als Klothoid ausgebildet ist.

Ein entlang eines Klothoid-Bogens geführter Körper zeichnet sich durch eine gleichmässige Winkeländerung aus, wodurch z. B. Querschläge im Umlenkbereich vermieden werden, welche bei einem Übergang von einem geraden Streckenabschnitt auf einen Kreisbogen entstehen. Ferner werden allgemein Querbeschleunigungen senkrecht zur Bewegungsbahn und insbesondere Beschleunigungsspitzen reduziert. Der Krümmungsradius entlang des Klothoidbogens nimmt ausgehend vom geraden Streckenabschnitt zudem kontinuierlich ab.

Der Wasserführungskanal und entsprechend der Lastabschnitt und ggf. auch der Rückführabschnitt verlaufen bevorzugt in einer schiefen Ebene. Das heisst, die Anströmorgane werden in diesen Bereichen linear und mit konstantem Neigungswinkel zu einer horizontalen Ebene fortbewegt. Es ist jedoch auch denkbar, dass der Neigungswinkel im Bereich des Lastabschnittes und/oder Rückführabschnittes variabel ist. Der Wasserführungskanal und entsprechend auch der Lastabschnitt können auch in mehrere Kanalabschnitte bzw. Lastteilabschnitte gegliedert sein, welche verglichen mit den benachbarten Abschnitten jeweils unterschiedliche Neigungswinkel aufweisen.

Der Neigungswinkel α der schiefen Ebene ist grösser 0°. Ferner ist der Neigungswinkel α kleiner 90° (Winkelgrade). Bevorzugt ist der Neigungswinkel grösser 10° und insbesondere grösser 20°. Ferner ist der Neigungswinkel bevorzugt kleiner 80° und insbesondere kleiner 70°. Besonders bevorzugt liegt der Neigungswinkel in einem Bereich von 30° bis 60°.

Die Anlage, insbesondere die Antriebsanordnung und die Umlenkorgane, sind bevorzugt in einem Gestell montiert. Das Gestell und die Montage der Betriebskomponenten sind bevorzugt so ausgelegt, dass die Neigung der Antriebsanordnung bzw. des Lastabschnittes sowie ggf. auch die Länge des Lastabschnittes einstellbar und somit für verschiedene Kanalgefälle und Kanallängen anpassbar ist.

Die Anlage kann ferner einen Entlastungskanal vorsehen, welcher zum Beispiel unterhalb des Wasserführungskanals geführt ist. Der über einen Zuführkanal dem Wasserführungskanal zugeführte Wasserstrom kann hierdurch teilweise oder vollständig, unter Umgehung des Einlaufbereichs in den Entlastungskanal umgeleitet werden. Hierzu ist ein ansteuerbares Leitorgan vorgesehen, welches den Zufluss in den Entlastungskanal bzw. in den Einlaufbereich steuert.

Es ist auch möglich, dass die Antriebsanordnung zusammen mit den dieser zugeordneten Schienenführung und den Umlenkorganen mittels einer Hebemechanik über eine Steuerung aus dem Wasserführungskanal angehoben werden kann. Das Anheben der genannten Organe kann aus sicherheitstechnischen Gründen, z. B. zum Schutz der Anlage bei Hochwasser, oder zu Revisionszwecken vorgesehen sein.

Zum Betreiben der Anlage wird in einem höher gelegenen Einlaufbereich Wasser in den geneigten Wasserführungskanal der Anlage eingelassen. Anströmorgane werden durch das obere Umlenkorgan in einer bogenförmigen, insbesondere kreisförmigen Bewegungsbahn aus dem Rückführabschnitt in den Einlaufbereich geführt und tauchen in den Wasserführungskanal ein.

Während des Eintauchvorganges fliesst Wasser von einem Zuführkanal in den Wasserführungskanal ein und strömt das eintauchende Anströmorgan an. Das anströmende Wasser wird so in die sich gleichzeitig ausbildenden Wasseraufnahmeabteile eingeleitet. Das Wasser wird hierbei in den Wasseraufnahmeabteilen gehalten. D. h., das Wasser kann nicht frei den Wasserführungskanal hinunter fliessen.

Gemäss der oben beschriebenen ersten Ausführungsvariante treibt das in den Aufnahmeabteilen gefasste Wasser die Anströmorgane durch dessen Potentialgefälle, also Schwerkraft bedingt, entlang des Wasserführungskanals in Richtung des unteren Umlenkorgans bzw. Auslassbereichs an. Das heisst, das im Einlaufbereich an das eintauchende Anströmorgan anströmende Wasser wird während des Eintauchens des Anströmorgans in den Wasserstrom an der Anströmwand aufgestaut und so in dem sich gleichzeitig ausbildenden Wasseraufnahmeabteil zurückbehalten.

Die mechanische Energie wird entsprechend primär aus der potentiellen Energie des Wassers gewonnen. Die Anströmorgane und dementsprechend die Antriebsanordnung wird hier durch die Gewichtskraft des Wassers in den Wasseraufnahmeabteilen, also durch deren Gravitationsdruck, angetrieben.

Entsprechend entspricht die Auslaufgeschwindigkeit des Wassers beim Verlassen des Wasserführungskanals im Wesentlichen der Einlaufgeschwindigkeit des Wasser beim Eintritt in den Wasserführungskanal.

Aus diesem Grund kann das Anströmorgan der ersten Ausführungsvariante auch Gravitationsdruckübertragungseinheit oder Wasserrückhalteorgan und die Anströmwand auch Wasserrückhaltewand genannt werden.

Gemäss einer zweiten Ausführungsvariante sind die Anströmorgane Teil eines mittel- oder unterschlächtigen Antriebsrades. Die Anströmorgane sind entlang des Umfangs radial aussen am Antriebsrad angeordnet. Die Anströmorgane können z. B. an Speichen eines als Speichenrad ausgebildeten Antriebsrades angeordnet sein.

Da das Antriebsrad als starre Konstruktion ausgeführt ist, sind die daran angebrachten Anströmorgane ebenfalls zwangsgeführt.

Die Anlage gemäss der zweiten Ausführungsvariante enthält ebenfalls einen in einem Lastabschnitt des Antriebsrades angeordneten Wasserführungskanal mit einem Kanalboden und zwei seitlichen Kanalwänden. Die Anströmorgane tauchen in einem höher liegenden Einlaufbereich in den Wasserführungskanal ein. Dabei bilden auch hier zwei unmittelbar hintereinander folgende Anströmorgane zusammen mit dem Wasserführungskanal ein Wasseraufnahmeabteil auf.

Das Wasser strömt nun im höher liegenden Einlaufbereich in den Wasserführungskanal ein und wird in den sich bildenden Wasseraufnahmeabteilen aufgenommen. Durch die vom fliessenden Wasser mitgeführte kinetische Energie wir das Antriebsrad über die Anströmorgane angetrieben. Das Wasser wird in den Aufnahmeabteilen in den tiefer liegenden Auslassbereich geführt und dort wieder aus den Aufnahmeabteilen entlassen. Der Einlaufbereich kann auf Höhe der Antriebsnabe oder tiefer liegen.

Gemäss dieser zweiten Ausführungsvariante werden die Anströmorgane durch die kinetische Energie des Wassers angetrieben. Die mechanische Energie wird entsprechend primär aus der kinetischen Energie des Wassers gewonnen. Entsprechend ist die Auslaufgeschwindigkeit des Wassers beim Verlassen des Wasserführungskanals erheblich geringer als dessen Einlaufgeschwindigkeit beim Eintritt in den Wasserführungskanal.

Der Begriff "Anströmorgan" bezieht sich also nicht auf die Art der Gewinnung von mechanischer Leistung aus der kinetischen oder potentiellen Energie des Wassers, sondern vielmehr auf das Anströmen der besagten Organe im Einlaufbereich zwecks Befüllen der Wasseraufnahmeabteile.

Am unteren Umlenkorgan werden die Anströmorgane über eine bogenförmige oder sogar teilkreisförmige Bewegungsbahn wieder aus dem Lastabschnitt und entsprechend aus dem Wasserführungskanal ausgeschwenkt, so dass das mitgeführte Wasser im Auslassbereich aus den Wasseraufnahmeabteilen freigegeben wird und abgeführt werden kann.

Der Auslassbereich kann derart ausgestaltet sein, dass das Wasser vertikal oder im wesentlichen vertikal nach unten austreten kann. So kann hierzu im Auslassbereich eine Art Schachtöffnung ausgebildet sein. Dadurch wird verhindert, dass Restwasser durch die Anströmorgane in die Umlenkung mitgenommen, hoch geführt und dadurch der Wirkungsgrad der Anlage reduziert wird.

Die Anlage wird leistungsvariabel betrieben, wobei die Umlaufgeschwindigkeit der Zuflussgeschwindigkeit des Wassers angepasst werden kann.

Die Anlage wird dabei so geregelt, dass sich die Antriebsanordnung bzw. die Anströmorgane bei konstanten Zuflussmengen mit konstanter Geschwindigkeit bewegen.

Es kann ferner vorgesehen sein, dass, z. B. je nach Leistungsbedarf, der Neigungswinkel verändert wird.

Die erfindungsgemässe Wasserkraftanlage findet überall dort Anwendung, wo Wasser einen Höhenunterschied durchströmen muss. Dies können z. B. Fliessgewässer oder Auslässe von Stauanlagen sein. Da die behördlichen Auflagen für Bauten in Fliessgewässern sehr streng sein können, eignet sich der Einsatz der erfindungsgemässen Anlage insbesondere bei bereits bestehenden hydrotechnischen Bauwerken oder anderen industriellen Anlagen.

So findet die Anlage beispielsweise Einsatz bei Kläranlagen, z. B. bevor das gereinigte Wasser in ein Gewässer entlassen wird, oder in Industrieanlagen, in welchen grössere Mengen Brauchwasser für Prozesse umgesetzt werden. Die erfindungsgemässe Anlage eignet sich bereits für Fallhöhen von 2 bis 20 m.

Die Zwangsführung der Anströmorgane im Lastabschnitt erlaubt eine exakte Ausrichtung der Anströmorgane im Wasserführungskanal. Daher können die vorzugsweise berührungsfrei im Wasserführungskanal geführten Anströmorgane mit vergleichsweise geringen Toleranzen gegenüber dem Wasserführungskanal ausgelegt werden.

Die Erfindung wird nachfolgend anhand von Figuren näher erläutert. Die Figuren zeigen lediglich einige besondere Ausführungsformen und Weiterentwicklungen, welche keinesfalls als abschliessend zu betrachten sind. Es zeigen:
- Figur 1:: eine perspektivische Ansicht einer erfindungsgemässen Anlage;
- Figur 2a:: eine perspektivische Ansicht eines Anströmorgans;
- Figur 2b:: eine perspektivische Ansicht von Anströmorganen;
- Figur 3:: eine frontale Ansicht eines in einer Führungsschiene geführten Anströmorgans;
- Figur 4a:: eine weitere perspektivische Ansicht eines Anströmorgans;
- Figur 4b:: einen vergrösserten Ausschnitt des Verbindungsorgans eines Anströmorgans gemäss Figur 4a;
- Figuren 5a und 5b:: eine Seitenansicht einer erfindungsgemässen Anlage im Einlaufbereich gemäss einer ersten Ausführungsform;
- Figuren 6a und 6b:: eine Seitenansicht einer erfindungsgemässen Anlage im Einlaufbereich gemäss einer zweiten Ausführungsform;
- Figur 7a:: eine perspektivische Ansicht der Umlenkorgane mit Führungsschienen gemäss einer ersten Ausführung;
- Figur 7b:: eine perspektivische Ansicht der Umlenkorgane mit Führungsprofilen gemäss einer zweiten Ausführung;
- Figur 8:: perspektivische Ansicht einer Wasserkraftanlage mit mehreren Anlagen gemäss Figur 1;
- Figur 9a bis 9c:: verschiedene Ansichten eines einzelnen in einem Wasserführungskanal geführten Anströmorgans;
- Figur 10:: eine perspektivische Teilansicht einer weiteren Ausführungsform einer Anlage mit geschlossener Führungsschiene und mit einer Antriebseinheit;
- Figur 11:: eine Querschnittsansicht einer weiteren Ausführungsform eines Anströmorgans;
- Figur 12:: eine Querschnittsansicht einer weiteren Ausführungsform eines Anströmorgans;
- Figur 13:: eine perspektivische Ansicht eines erfindungsgemässen Anströmorgans;
- Figur 14:: eine Seitenansicht einer erfindungsgemässen Anlage im Einlaufbereich gemäss einer ersten Ausführungsform;
- Figur 15:: eine vergrösserte Seitenansicht der Anlage aus dem Einlaufbereich;
- Figur 16a:: eine Frontansicht eines erfindungsgemässen Anströmorgans;
- Figur 16b:: eine Seitenansicht des erfindungsgemässen Anströmorgans in Richtung A gemäss Figur 16a;
- Figur 17:: eine Seitenansicht einer weiteren Ausführungsform eines erfindungsgemässen Anströmorgans;
- Figur 18:: eine Seitenansicht einer erfindungsgemässen Anlage gemäss einer zweiten Ausführungsform.

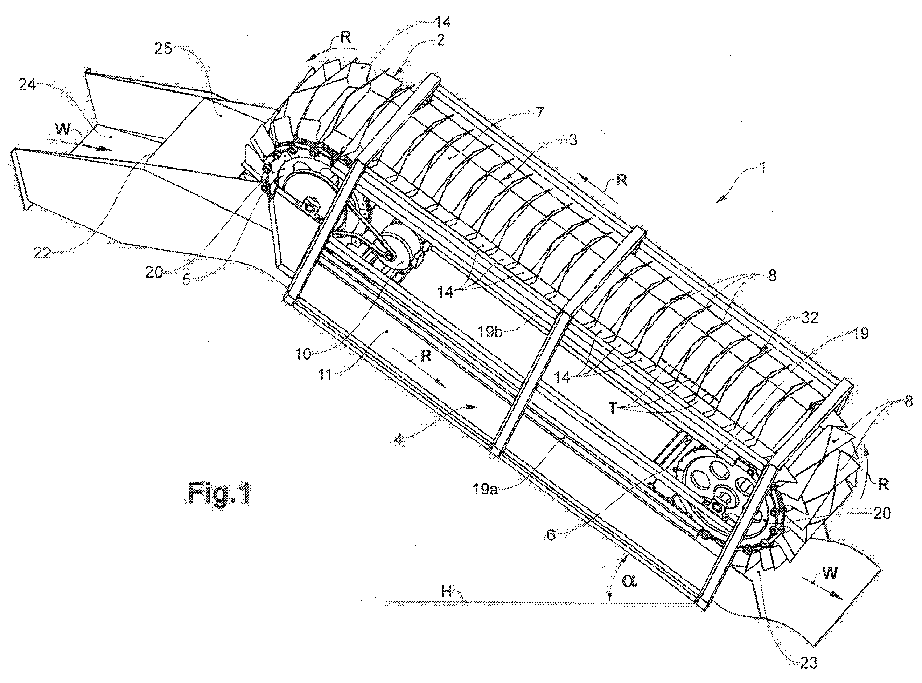

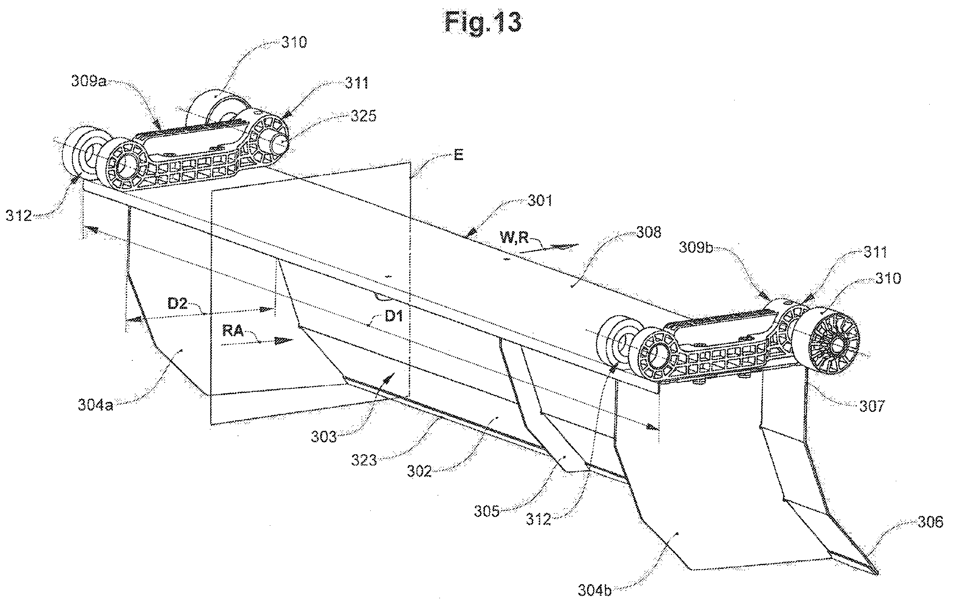

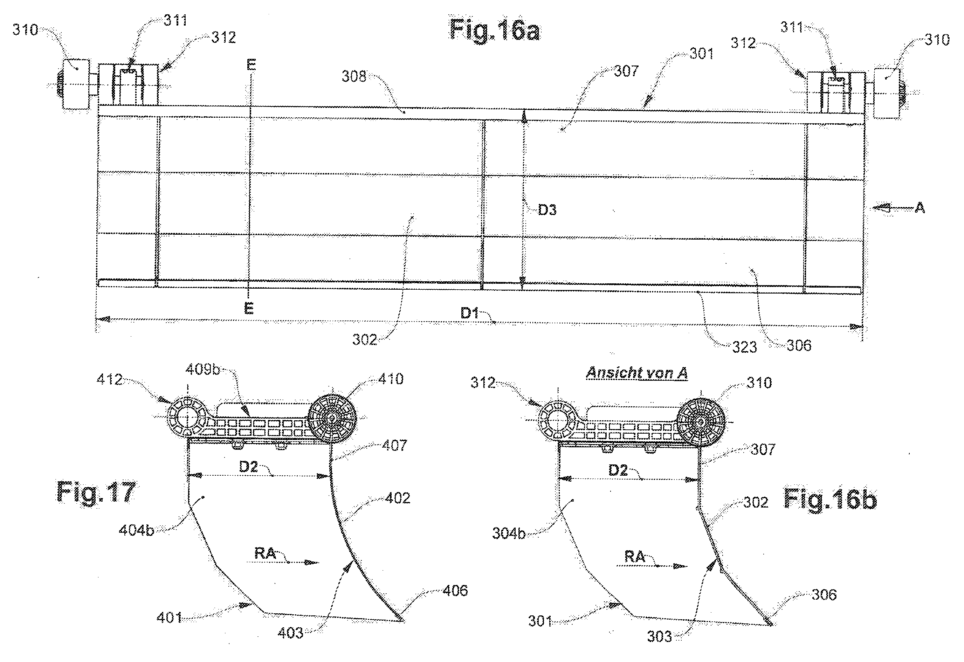

Die in den nachfolgenden Figuren 1 bis 12 dargestellten Anströmungsorgane stellen bezüglich der Ausbildung der Anströmwand eine alternative Ausführungsform dar, welche jedoch nicht Gegenstand der vorliegenden Erfindung ist. Es sei jedoch betont, dass die gemäss den Figuren 13 bis 17 gezeigte erfindungsgemässe Ausführungsform eines Anströmorgans 301 auf Anlagen, wie sie in Figur 1, 5a, 5b, 6a, 6b, 7a, 7b, 8 und 10 dargestellt sind, anwendbar ist.

Ferner treffen die in den Figuren 1 bis 12 gezeigten Ausführungsformen von Anströmorganen bezüglich der Ausbildung und Anordnung der Führungsmittel sowie der Verbindungsmittel am Anströmorgan und die Verkettung der Anströmorgane auch auf das erfindungsgemässe Anströmorgan bzw. die erfindungsgemässe Anlage zu. Insofern unterscheidet sich das Anströmorgan gemäss den Figuren 1 bis 12 lediglich durch die Formgestaltung der Anströmwand nicht jedoch durch die anderen strukturellen Merkmale vom erfindungsgemässen Anströmorgan.

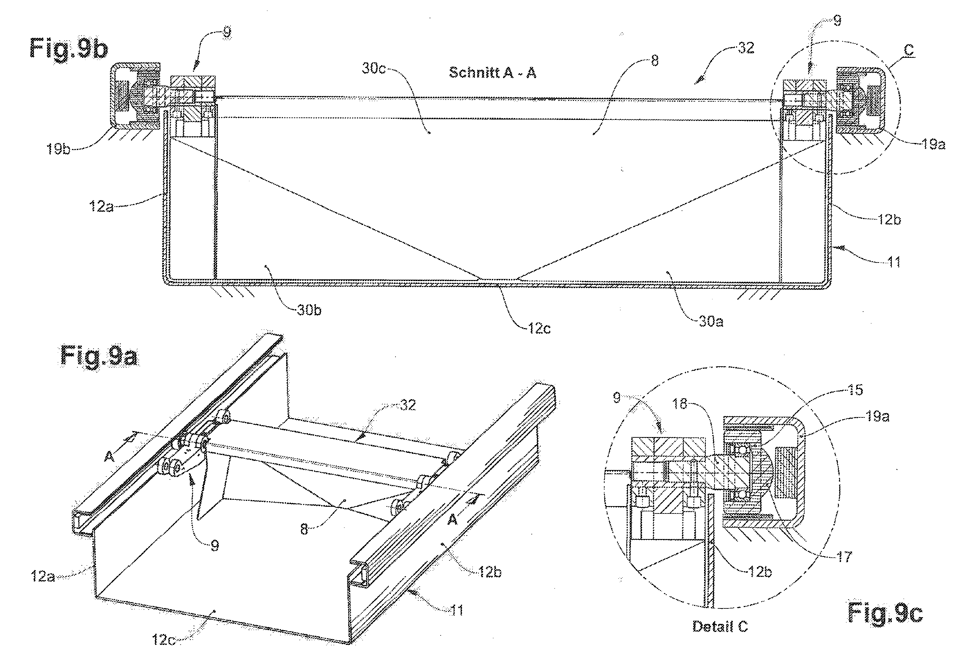

Im weiteren trifft auch die in den Figuren 9a, 9b, 11 und 12 gezeigte Führung im Wasserführungskanal auf das erfindungsgemässe Anströmorgan bzw. die erfindungsgemässe Anlage zu.

Die Anlage 1 gemäss Figur 1 zeigt eine, entlang einer Umlaufrichtung R um ein oberes Umlenkorgan 5 und ein unteres Umlenkorgan 6 geführte Antriebsanordnung 2 in Form einer zusammenhängenden Antriebsstruktur 7. Die Antriebsstruktur 7 weist einen entlang eines Wasserführungskanals 11 (siehe auch Figur 9b) zwangsgeführten Lastabschnitt 4, z. B. in Form eines Lasttrums, und einen oberhalb und parallel zu diesem geführten Rückführabschnitt 3, z.B. in Form eines Rücktrums, auf.

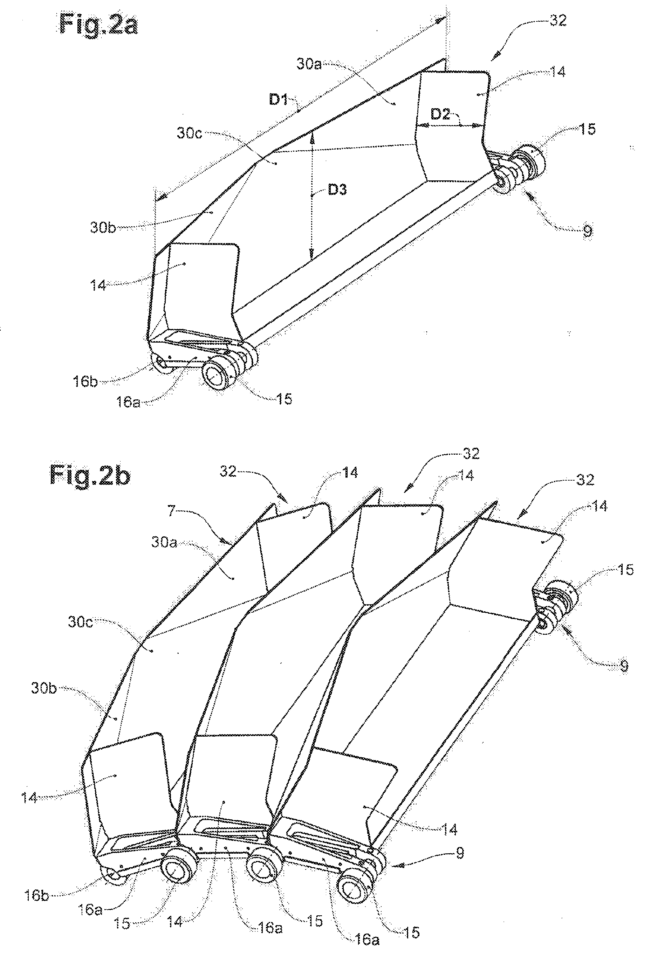

Die Antriebsstruktur 7 wird in Umlaufrichtung R angetrieben. Die Antriebsstruktur 7 ist aus einer Mehrzahl von Anströmorganen 32, welche als Antriebsglieder 9 vorliegen (siehe Figur 2a 2b), gebildet. Die Antriebsglieder 9 beinhalten jeweils eine Anströmwand 8, die längs des Lastabschnitts 4 quer in den Wasserführungskanal 11 eingreift.

Die Anströmwand 8 (siehe Figur 2a, 2b) ist als schaufelförmige Wandelemente ausgebildet und weisen zwei seitlich angeordnete Wandabschnitte 30a, 30b auf, welche entgegen der Bewegungsrichtung R der Antriebsstruktur 7 aus der Ebene der Anströmwand 8 gekrümmt bzw. weggebogen sind. Der Krümmungswinkel kann z. B. 10 - 30° betragen. Die Wandabschnitte 30a, 30b begrenzen einen flächigen, mittleren Wandabschnitt 30c. Die Anströmwand 8 weist eine Breite von D1 auf, welche durch die Spalttoleranz kleiner ist als die Kanalbreite. Ferner weist das Anströmorgan eine Höhe D3 und eine Tiefe D2 auf.

Zwei benachbarte Anströmwände 8 bilden zusammen mit dem Kanalboden 12c sowie den beiden seitlichen Kanalwänden 12a, 12b jeweils ein so genanntes Wasseraufnahmeabteil 13 aus, wobei der Kanalboden 12c und die seitlichen Kanalwände 12a, 12b vorzugsweise ortsfest bzw. unbewegt sind. (siehe Figur 1, 5a, 5b, 6a, 6b und 9a - 9c). Die Anströmwände 8 sind zwar berührungsfrei zum Wasserführungskanal 11 geführt, doch bilden diese zu den Kanalwänden 12a-12c dank der exakten Führung der Antriebsglieder 9 einen vergleichsweise kleinen Spalt aus, durch welchen lediglich wenig Wasser aus den Wasseraufnahmeabteilen 13 entweicht.

Die Anströmwand 8 beinhaltet ferner zwei seitlich, aussermittig angeordnete Versteifungselemente 14 in Form von Querwänden. Die Querwände 14 stellen jedoch nicht den seitlichen Abschluss der Wasseraufnahmeabteile 13 dar, welche, wie oben beschrieben, seitlich durch die beiden seitlichen Kanalwände 12a, 12b abgeschlossen werden. Durch die Nähe der Querwände 14 zu den Kanalwänden 12a, 12b, wird die Strömung zur Kanalwand 12a, 12b hin beruhigt und die Verwirbelung des Wassers reduziert.

Jedes Antriebsglied 9 enthält ferner zwei seitlich von der Anströmwand 8 angeordnete Führungsrollen 15. Das Anströmorgan 32 umfasst überdies ein Verbindungsorgan in Form eines gabelförmigen Verbindungselementes 16a und eines diesem in Bewegungsrichtung R gegenüber liegenden Verbindungskörpers 16b, welche beide mit entsprechenden Durchbrüchen zur Aufnahme der Rollenachse 18 der Führungsrollen 15 versehen sind.

Zur Herstellung der zusammenhängenden Antriebsstruktur 7, werden die Antriebsglieder 9 beidseitig mit ihren jeweiligen Verbindungskörpern 16b in die Öffnung zwischen den Gabellaschen des gabelförmigen Verbindungselementes 16a geschoben, wobei die Rollenachse 18 sowohl durch die Durchbrüche in den Gabellaschen als auch im Aufnahmekörper 16b geschoben wird. Gleichzeitig wird auch die Führungsrolle 15 über die Rollenachse 18 am Antriebsglied 9 bzw. an der Antriebsstruktur 7 befestigt. Es ist hierbei anzumerken, dass die Antriebsglieder 9 bzw. die Antriebsstruktur 7 keine quer zur Bewegungsrichtung R durchgängigen Achselemente benötigt.

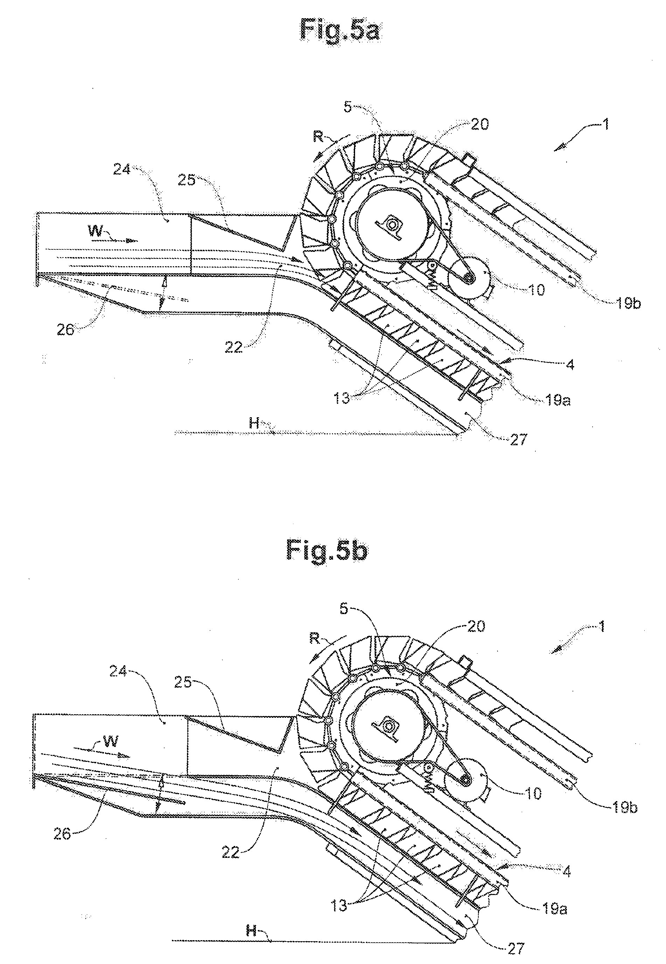

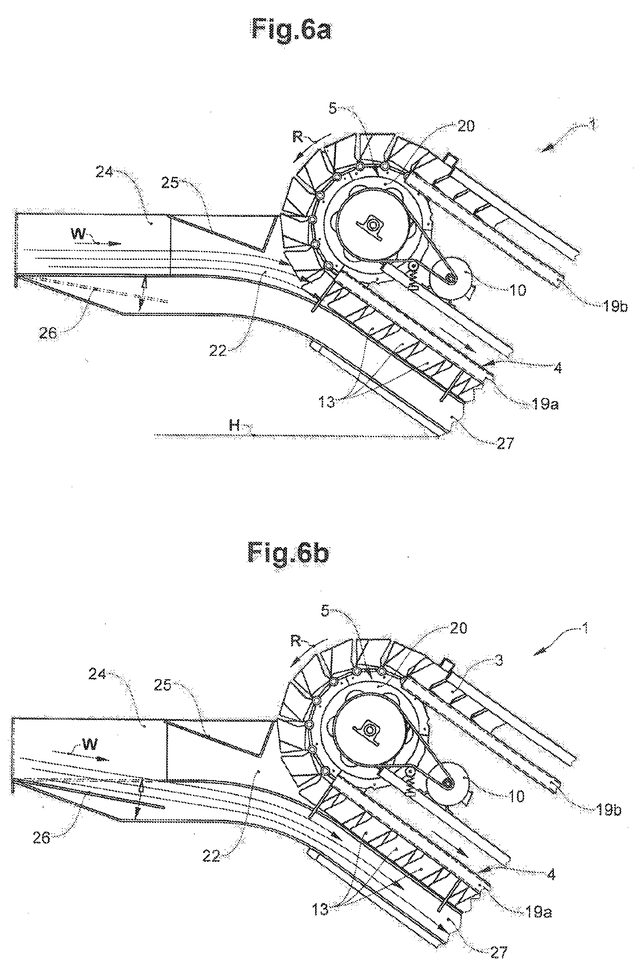

Der Wasserführungskanal 11 sowie der Lastabschnitt 4 liegen in einer schiefen Ebene mit einem abschnittsweise konstanten Gefälle und verlaufen überdies parallel zueinander. In einem oberen Einlaufbereich 22 (siehe auch Figur 5a, 5b, 6a, 6b) wird das Wasser aus einem Zuführkanal 24 in Zuführrichtung W dem Wasserführungskanal 11 zugeführt. In einem unteren Auslassbereich 23 verlässt das aus den Wasseraufnahmeabteilen 13 freigegebene Wasser die Anlage 1.

Der Einlaufbereich 22 enthält ein Durchgangsbegrenzungsorgan 25. Mit dem Durchgangsbegrenzungsorgan 25 lässt sich über entsprechende Steuerungsmittel die Grösse der Durchlassöffnung und somit die dem Wasserführungskanal 11 zugeführte Wassermenge steuern. Es kann jedoch auch vorgesehen sein, dass die Durchlassöffnung im Voraus festgelegt und während des Betriebes der Anlage 1 nicht veränderbar ist.

Die Anlage enthält ferner einen Entlastungskanal 27, welcher unterhalb des Wasserführungskanals 11, und vorzugsweise parallel zu diesem verläuft, wie in den Figuren 5a, 5b und 6a, 6b dargestellt. Der Zugang zum Entlastungskanal 27 wird über ein Wasserleitorgan 26, welches eine Öffnungsklappe oder ein Öffnungsschieber bzw. ein Schott sein kann, gesteuert.

Der Wasserfluss kann über die Stellung des Wasserleitorgans 27 in den Wasserführungskanal 11 oder in den Entlastungskanal 27 geleitet werden. Das Wasserleitorgan 26 wird ebenfalls über eine Steuerungseinrichtung angesteuert. Die Ableitung den Wasserflusses W über den Entlastungskanal 27 geschieht zum Beispiel dann, wenn die Anlage, z. B. für Unterhaltszwecke, ausser Betrieb genommen werden muss. So kann das Wasser z. B. bei wiederkehrenden Reinigungs- und Wartungsarbeiten durch den Entlastungskanal 27 abgeleitet werden, so dass das Wasser die Verschmutzung nicht durch die Anlage führt.

Ferner kann bei einem hohen Wasseraufkommen, ein Teil des Wassers über den Entlastungskanal 27 abgeleitet werden. Das Wasserleitorgan 26 kann auch allgemein zur Regulierung des Wasserzuflusses in den Einlaufbereich dienen, um so z. B. eine konstante Umlaufgeschwindigkeit der Antriebsstruktur zu gewährleisten.

Im Weiteren kann das Wasser oder ein Teil davon auch über den Entlastungskanal 27 abgeleitet werden, wenn Fremdstoffe, wie z. B. Feststoffe, im Wasser enthalten sind, welche die Funktion der Anlage 1 beeinträchtigen könnten. Wie bereits erwähnt, ist es auch möglich, dass lediglich ein Teil des Wassers über den Entlastungskanal 27 abgeleitet wird.

Das Wasserleitorgan 26 ist gemäss dem gezeigten Ausführungsbeispiel eine Öffnungsklappe im Boden des Zuführkanals 24. Auf diese Weise können z. B. schwere Feststoffe über den Entlastungskanal 27 gezielt aus dem Wasserstrom W ausgeschieden werden während die Anlage in Betrieb ist. In den Darstellungen nach Figur 5a und 6a ist das Leitorgan 26 so gestellt, dass der Wasserstrom dem Wasserführungskanal 11 zugeführt wird, während in den Figuren 5b und 6b das Leitorgan 26 so gestellt ist, dass der Wasserstrom dem Entlastungskanal 27 zugeführt wird.

Die Anströmwände 8 werden über das obere Umlenkorgan 5 in den Einlaufbereich 22 geführt, wobei diese im Einlaufbereich 22 aus einer Kurvenbahn am Umlenkorgan 5 in eine lineare Bewegungsbahn entlang des im Einlaufbereich 22 beginnenden, ebenfalls linearen Wasserführungskanals 11 überführt werden.

Der Lastabschnitt 4 liegt dabei in der linearen Bewegungsbahn der Anströmwände 8. Gleichzeitig werden im Einlaufbereich 22 auch die Wasseraufnahmeabteile 13 ausgebildet. Dies geschieht durch die Zusammenführung der Anströmwände 8 mit dem Wasserführungskanal 11, d.h. durch Eintauchen der Anströmwände 8 in den Wasserführungskanal 11.

Der Wasserstrom wird im Zuführkanal 24 horizontal oder mit leichtem Gefälle dem Einlaufbereich 22 zugeführt, wo dieser dann in das stärkere Gefälle des Wasserführungskanals 11 geleitet wird. D.h., an den Zuführkanal 24 schliesst im Einlaufbereich 22 der geneigte Wasserführungskanal 11 an. Der Wasserführungskanal 11 sowie der Lastabschnitt 4 weisen gegenüber einer Horizontalen H einen Neigungswinkel α auf.

Die Figuren 5 und 6 unterscheiden sich nun in der Führung der Anströmwände 8 im Einlaufbereich 22. Gemäss der Ausführungsvariante nach Figur 5 sind der Einlaufbereich 22 und die Führung der Anströmwände 8 im Einlaufbereich 22 so ausgestaltet, dass jeweils nur ein einziges, sich formendes Wasseraufnahmeabteil 13 im Einlaufbereich 22 mit Wasser beschickt wird. Das heisst, die Befüllung eines sich formenden Wasseraufnahmeabteils 13 mit Wasser beginnt erst, wenn die dazugehörige, vorlaufende Anströmwand 8 bis zu seiner Arbeitsposition in den Wasserführungskanal 11 eingetaucht ist und das vorlaufende Wasseraufnahmeabteil hierdurch 13 verschliesst.

Gemäss der Ausführungsvariante nach Figur 6 sind der Einlaufbereich 22 und die Führung der Anströmwände 8 im Einlaufbereich 22 so ausgestaltet, dass jeweils zwei, sich formende Wasseraufnahmeabteile 13 im Einlaufbereich 22 gleichzeitig mit Wasser W beschickt werden. In diesem Fall beginnt die Befüllung eines sich formenden Wasseraufnahmeabteils 13 mit Wasser bereits bevor die dazugehörige, vorlaufende Anströmwand 8 in seine Endposition in den Wasserführungskanal 11 eingetaucht ist, so dass das vorlaufende Wasseraufnahmeabteil 13 noch nicht vollständig geschlossen ist. D.h., der Spalt zwischen dem Kanalboden 12c und der Anströmwand 8 hat noch nicht seine minimale Distanz erreicht.

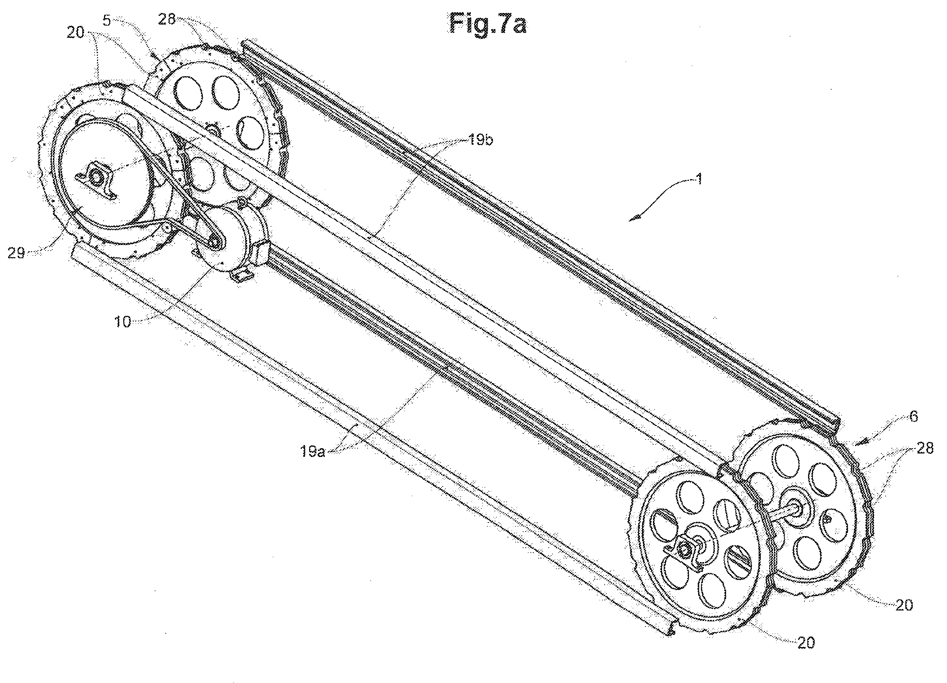

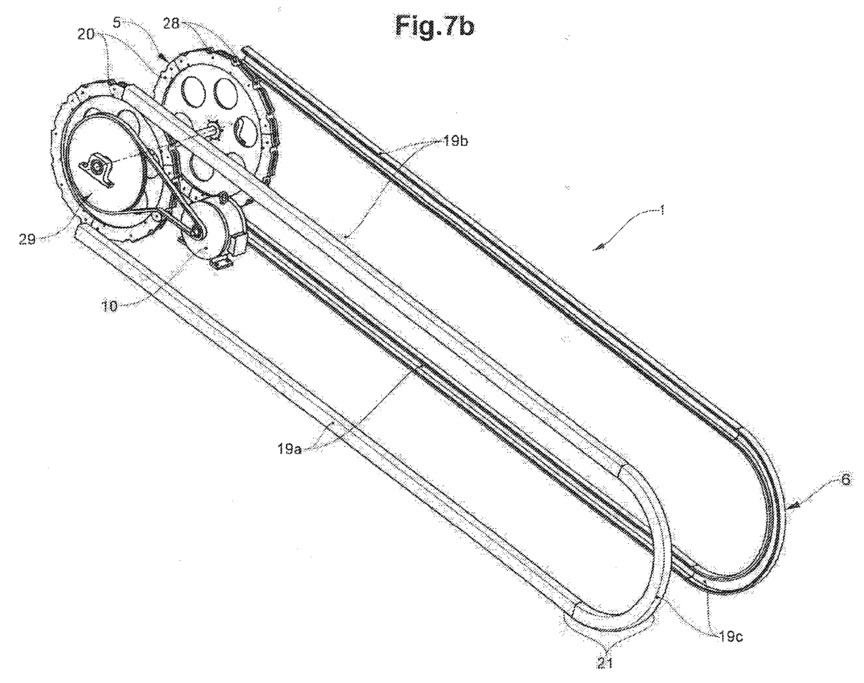

In den Figuren 7a und 7b ist jeweils eine besondere Ausführungsform eines unteren Umlenkorgans 6 dargestellt. Gemäss der Ausführungsform nach Figur 7a umfassen sowohl das obere als auch das untere Umlenkorgan 5, 6 einen Drehkörper 20 in Form von zwei über eine Drehachse gekoppelten, seitlich angeordneten Antriebsräder mit Antriebsvertiefungen 28 entlang ihres Umfanges. Das Antriebsrad 20 mit den umfänglichen Vertiefungen oder Erhebungen, wie z. B. Zähne, übt die Funktion eines Zahnrades aus.

Die Leistung zur Erzeugung elektrischer Energie wird vom oberen Umlenkorgan 5 abgenommen. Das obere Umlenkorgan 5 steht hierzu in Wirkverbindung mit einem Stromerzeugungsgenerator 10, welcher mittels einer Getriebeeinrichtung 29 kinetische Energie aus der Drehbewegung der Antriebsstruktur 7 am Antriebsrad 20 abnimmt und in elektrische Energie umwandelt.

Zwischen den Umlenkorganen 5, 6 ist jeweils ein unteres und oberes Paar von parallel verlaufenden Führungsprofilen 19a, 19b angeordnet, welche die seitliche Führung der Antriebsglieder 9 im unten liegenden Lastabschnitt 4 und im oben liegenden Rückführabschnitt 3 ausbilden. Die Führungsprofile 19a, 19b sind beispielsweise als U-Profile ausgebildet, welche jeweils zum Antriebsglied 9 hin offen sind. Sie sind seitlich vom Wasserführungskanal 11 oberhalb bzw. im Bereich des oberen Endabschnitts der Kanalseitenwände 12a, 12b angeordnet und mit einer Stützeinrichtung oder direkt oder indirekt mit dem Wasserführungskanal 11 verbunden.

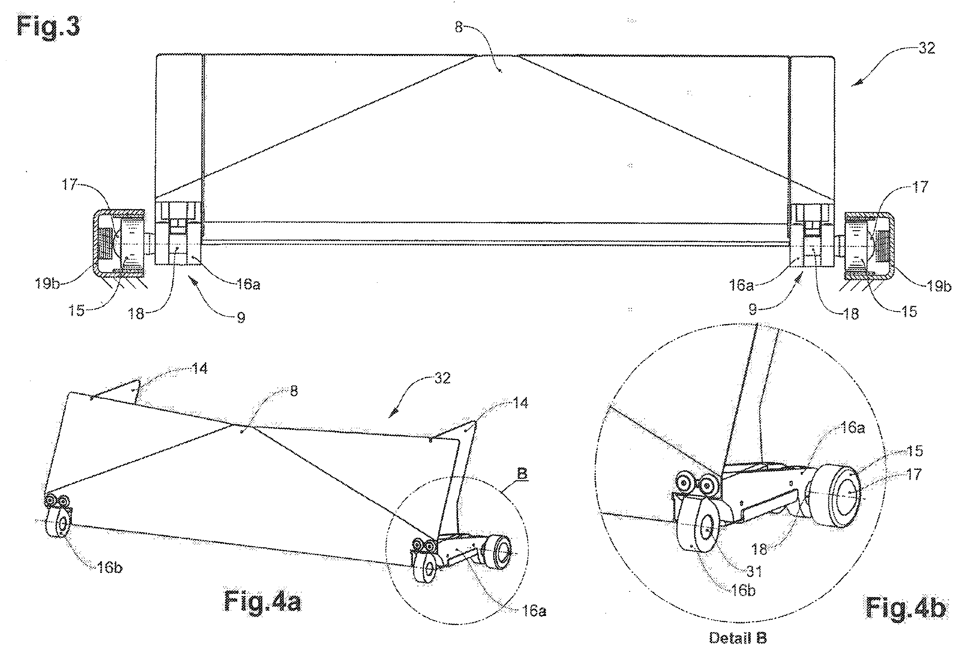

Die Führungsrollen 15 der Antriebsglieder 9, wie in Figur 3 bzw. 9 gezeigt, greifen beidseits seitlich in das U-förmige Führungsprofil 19a, 19b ein und rollen entlang den Laufflächen am Führungsprofil 19a, 19b ab. Die Führungsrollen 15 weisen eine Abrollfläche aus Kunststoff, wie POM (Polyoxymethylen), auf. Ferner besteht auch die Lauffläche am Führungsprofil 19a, 19b aus Kunststoff, wie z. B. POM. Auf diese Weise wird ein geräusch- und reibungsarmes Laufverhalten der Führungsrollen 15 gewährleistet.

Die Führungsrollen 15 sind über gekapselte Lager, z. B. Kugellager, reibungsarm gelagert. Die Führungsrollen 15 weisen ferner jeweils seitlich nach aussen zum Führungsprofil 19a, 19b hin gerichtete, kalottenförmige Seitenführungselemente 17 auf, über welche die Antriebsglieder 9 jeweils axial geführt sind. Die Seitenführungselemente 17 wie auch die korrespondierende Führungsfläche am Führungsprofil 19a, 19b sind bevorzugt aus Kunststoff, wie z. B. POM. Der Kunststoff zeichnet sich durch seine guten Gleiteigenschaften und sein geringes Wasseraufnahmevermögen aus.

Die in den Führungsprofilen 19a, 19b geführten Führungsrollen 15 der Antriebsglieder 9 verlassen jeweils beim Einlauf in das untere bzw. obere Umlenkorgan 5, 6 das dazugehörige Führungsprofil 19a, 19b, wobei gleichzeitig die Antriebsglieder 9 mit ihren Rollenachsen 18 in die Antriebsvertiefungen 28 zu liegen kommen. Durch diese Art von Formschluss wird der Drehkörper 20 von der Antriebsstruktur 7 angetrieben, wobei die Antriebsstruktur 7 gleichzeitig optimal geführt ist. Im konkreten Ausführungsbeispiel kommt der seitlich ausserhalb vom gabelförmigen Verbindungselement 16a liegende, freie Achsabschnitt in die Antriebsvertiefung 28 zu liegen.

Die Ausführungsform nach Figur 7b unterscheidet sich nun von der oben beschriebenen Ausführungsform nach Figur 7a dadurch, dass das untere Umlenkorgan 6 zur geführten Umlenkung der Antriebsstruktur 7 keinen Drehkörper sondern ein gekrümmtes Führungsprofil 19c mit bogenförmiger Führungsbahn aufweist. Das gekrümmte Führungsprofil 19c verbindet das untere Führungsprofil 19a des Lastabschnitts 4 mit dem oberen Führungsprofil 19b des Rückführabschnitt 3.

Die Antriebsglieder 9 der Antriebsstruktur 7 werden auf diese Weise entlang der bogenförmigen Führungsbahn vom Lastabschnitt 4 in den Rückführabschnitt 3 geführt. Der Übergangsbogen 21 vom Lastabschnitt 4 in die gekrümmte Führungsbahn des unteren Umlenkorgans 6 kann als Klothoid ausgebildet sein.

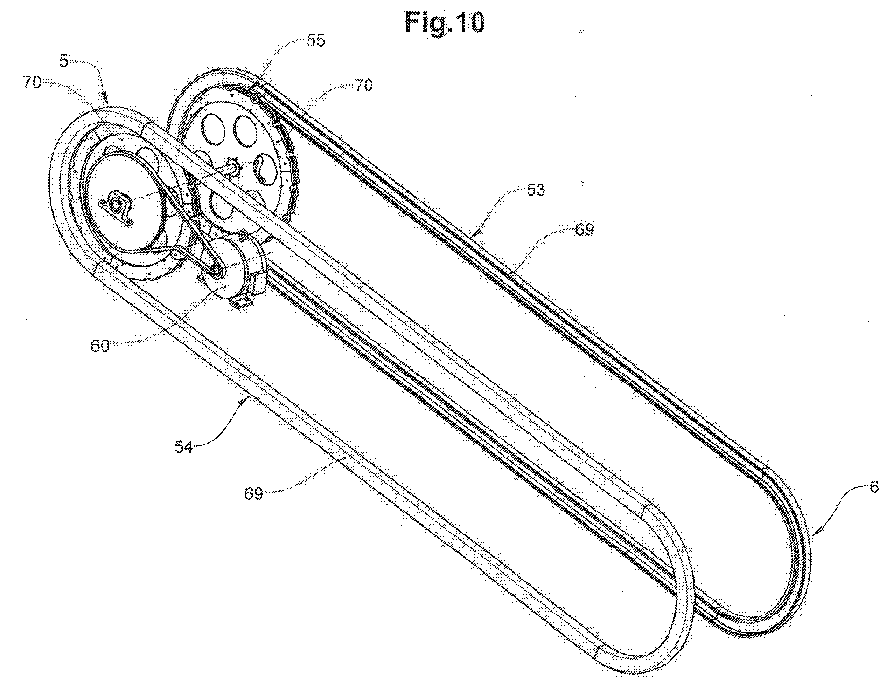

Selbstverständlich können die Umlenkorgane 5, 6 sowohl Drehkörper mit Vertiefungen zur Aufnahme der Rollenachsen als auch ein gekrümmtes Führungsprofil mit bogenförmiger Führungsbahn enthalten, so dass die Antriebsstruktur 7 sowohl über die Führungsrollen im Führungsprofil als auch über die Drehachsen in den Vertiefungen des Antriebsrades geführt ist (siehe Figur 10).

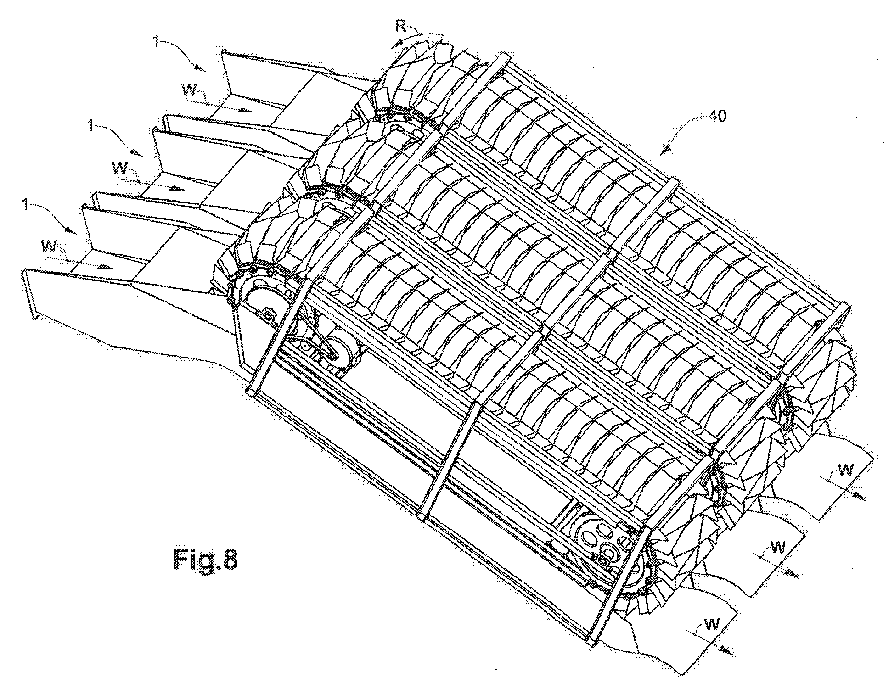

Die erfindungsgemässe Anlage eignet sich insbesondere auch für einen modularen Aufbau einer Wasserkraftanlage. So können beispielsweise mehrere, oben beschriebene erfindungsgemässe Anlagen, wie in Figur 8 beispielhaft dargestellt, nebeneinander angeordnet sein und auf diese Weise zu einer Wasserkraftanlage 40 kombiniert werden. Ferner können auch mehrere erfindungsgemässe Anlagen alternativ oder in Kombination zur vorgenannten parallelen Anordnung hintereinander, d.h. in Serie angeordnet sein.

Je nach Wasseraufkommen können beispielsweise einzelne Anlagen 1 zugeschaltet oder abgeschaltet werden. Dies geschieht über die Steuerung der Wasserzufuhr in die einzelnen Einlaufbereiche.

Die in Figur 10 gezeigte perspektivische Teilansicht einer besonderen Ausführungsform einer erfindungsgemässen Anlage weist zwei voneinander beabstandete, parallel zueinander verlaufende Führungsschienen 69 auf, welche entlang einer Umlaufbahn eine geschlossene Führung ausbilden. Die Führungsschienen 69 weisen in einem Last- und Rückführabschnitt 54, 53 jeweils einen geneigten und geraden Führungsabschnitt auf.

Die Führungsschienen 69 sind in einem oberen und unteren Umlenkbereich als bogenförmige Umlenkorgane 5, 6 ausgebildet, welche die Anströmorgane aus dem Rückführabschnitt in den Lastabschnitt und umgekehrt umlenken. Die besagten Bogenstücke verbinden die geraden Führungsabschnitte der Führungsschienen im Last- und Rückführabschnitt 54, 53 jeweils zu einer geschlossenen Führungsbahn. Hieraus ergibt sich eine Zwangsführung.

Die Führungsschienen umfassen beispielsweise einen U-förmigen Profillängskörper. Die U-förmigen Profillängskörper der Führungsschienen 69 sind zueinander hin offen. Die Anströmorgane (nicht gezeigt) sind nun zwischen den beiden Führungsschienen 69 angeordnet und über entsprechende Führungselemente in den Führungsschienen 69 geführt.

Im oberen Umlenkbereich sind die Führungsschienen 69 mit ihren bogenförmigen Abschnitten um den bzw. entlang des Umfangs eines Drehkörpers 55 geführt. Der Drehkörper 55 weist zwei voneinander beabstandete und über eine Drehachse miteinander verbundene Antriebsräder 70 auf.

Die Antriebsräder 70 weisen entlang ihres Umfanges angeordnete Antriebsvertiefungen auf, in welche die Anströmorgane eingreifen (nicht gezeigt) und auf diese Weise den Drehkörper 55 antreiben.

Der Drehkörper 55 ist zwecks Abnahme von Leistung mit einem Stromerzeugungsgenerator 60 gekoppelt. Der Drehkörper 55 und damit der Stromerzeugungsgenerator 60 werden durch die Druck- und/oder Zugkraft der Anströmorgane angetrieben.

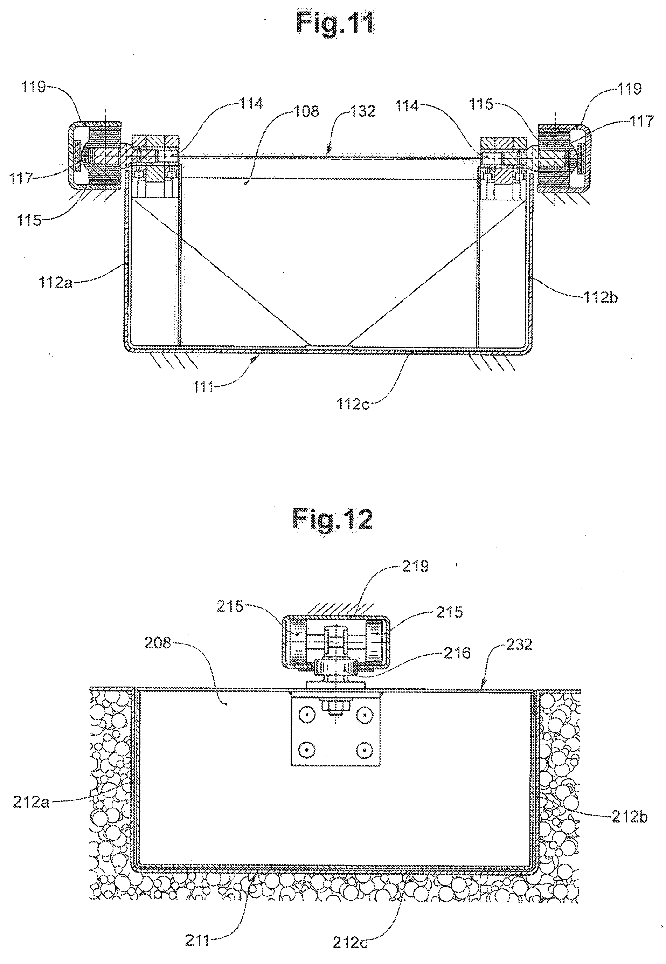

In Figur 11 ist eine mögliche konstruktive Lösung der Zwangsführung gemäss der weiter oben beschriebenen dritten Untervariante dargestellt. Die Ausführungsform gemäss Figur 11 zeigt einen rechteckförmigen Wasserführungskanal 111 mit einem Kanalboden 112c und zwei Kanalseitenwänden 112a, 112b. Seitlich am Wasserführungskanal 111 im öffnungsseitigen Bereich der Kanalseitenwände 112a, 112b sind beidseitig Führungsschienen 119 angeordnet.

Das Anströmorgan 132 ist mit ihrer Anströmwand 108 im Wasserführungskanal 111 angeordnet. Die Anströmwand 108 ist berührungsfrei im Wasserführungskanal 111 geführt, nimmt jedoch unter Ausbildung kleiner Spaltabstände praktisch den gesamten Querschnitt des Wasserführungskanals 111 ein.

Das Anströmorgan 132 enthält zwei, bezüglich Umlaufrichtung am radial innen liegenden Endabschnitt der Anströmwand 108 und seitlich von diesem angeordnete Gleitelemente 115.

Die Führungsschienen 119 umfassen jeweils ein U-förmiges Längsprofil, welches zu den diesen zugeordneten Gleitelementen 115 hin offen ist. Die Längsprofile sind also mit ihren Führungskanalöffnungen zueinander hin gerichtet. Die Gleitelemente 115 sind im Führungskanal gleitend geführt.

Die Gleitelemente 115 weisen jeweils ein seitlich nach aussen zur Führungsschiene 119 hin gerichtetes kalottenförmiges Seitenführungselement 117 auf, über welche das Anströmorgan 132 seitlich in der Führungsschiene 119 geführt ist.

Die Gleitelemente 115 sind über quer zur Umlaufrichtung angeordneten Verbindungsachsen 114 an der Anströmwand 108 befestigt.

In Figur 12 ist eine mögliche konstruktive Lösung der Zwangsführung gemäss der weiter oben beschriebenen zweiten Ausführungsvariante dargestellt. Die Anlage gemäss Figur 12 zeigt ebenfalls einen rechteckförmigen Wasserführungskanal 211 mit einem Kanalboden 212c und zwei Kanalseitenwänden 212a, 212b.

Über dem Wasserführungskanal 211 ist eine Führungsschiene 219 angeordnet. Die Führungsschiene 219 umfasst ein C-förmiges Längsprofil, welches zum Wasserführungskanal 211 hin offen ist und eine spaltförmige Führungskanalöffnung ausbildet.

Das Anströmorgan 232 ist mit ihrer Anströmwand 208 im Wasserführungskanal 211 angeordnet. Die Anströmwand 208 ist berührungsfrei im Wasserführungskanal 211 geführt nimmt jedoch unter Ausbildung kleiner Spaltabstände praktisch den gesamten Querschnitt des Wasserführungskanals 211 ein.

Das Anströmorgan 232 enthält zwei voneinander beabstandete und über eine Achse miteinander verbundene Führungsrollen 215, die über die Anströmwand 208 zwischen den in Umlaufrichtung betrachtet seitlichen Endabschnitten der Anströmwand 208 und hier ausserhalb des Wasserführungskanals 211 angeordnet sind. Die Führungsrollen 215 sind im C-förmigen Führungskanal der Führungsschiene 219 rollend geführt.

Die Führungsrollen 215 sind über eine durch die Führungskanalöffnung geführte Aufhängung mit der Anströmwand 208 verbunden. Das Anströmorgan 232 enthält ferner im Bereich der Aufhängung ein Horizontalführungselement 216, welches in der spaltförmigen Führungskanalöffnung geführt ist und so die Anströmwand 208 seitlich führt. Das Horizontalführungselement 216 kann ebenfalls eine Rolle sein.

Die Figuren 13 bis 17 zeigen nun ein erfindungsgemässes Anströmorgan mit einer Anströmwand 302, welche gegenüber dem Stand der Technik eine neue Geometrie aufweist. Das Anströmorgan 301 bzw. die Anströmwand 302 weist eine Breite D1 auf, welche durch die Spalttoleranz kleiner ist als die Breite des Wasserführungskanals. Ferner weist das Anströmorgan eine Höhe D3 auf.

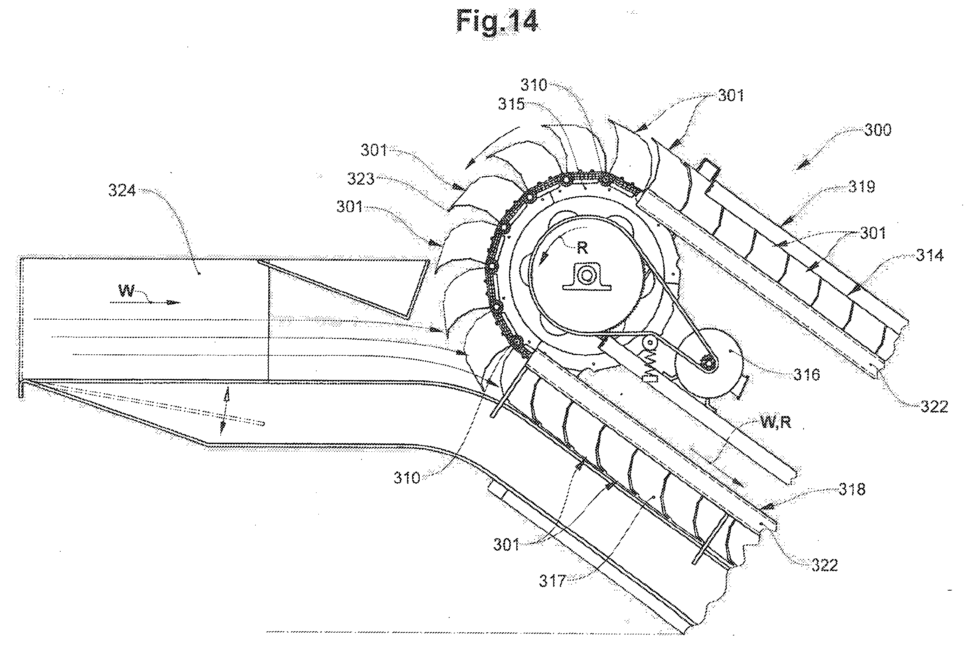

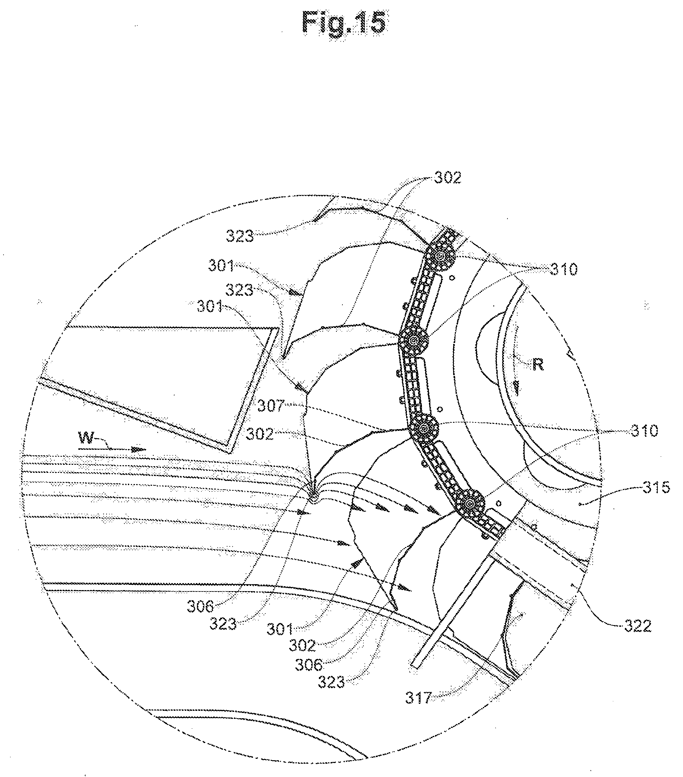

Die Anströmwand 302 weist einen ersten, freien Wandendabschnitt 306 und einen dem ersten Wandendabschnitt 306 gegenüber liegenden zweiten, führungsseitigen Wandendabschnitt 307 auf. Im Bereich des führungsseitigen Wandendabschnitt 307 sind Führungsmittel 309a und 309b zur Führung des Anströmorgans 301 in einer Führungseinrichtung 322 der Anlage 300 (siehe Figur 14 und 15) angeordnet. Der erste, freie Wandendabschnitt 306 bildet eine freie Eintauchkante 323 aus.

Die Anströmwand 302 ist gegen die zur Anströmseite 303 hin gerichtete Anströmrichtung gewölbt ausgebildet. D. h. der erste Wandendabschnitt 306 ist in Betrachtungsrichtung RA zur Anströmseite 303 hin gegenüber dem zweiten Wandabschnitt 307 vorlaufend. Die Krümmung wird durch drei in einem Winkel zueinander angeordnete Wandabschnitte ausgebildet.

Die Anströmwand 302 ist über zwei seitlich, aussermittig angeordnete Versteifungselemente 304a, 304b in Form von Querwänden verstärkt. Die Querwände 304a, 304b stellen auch hier nicht den seitlichen Abschluss der Wasseraufnahmeabteile dar, welche, wie weiter oben beschrieben, seitlich durch die beiden Kanalwände abgeschlossen werden.

Die Querwände 304a, 304b verlaufen quer zur Anströmwand 302 und parallel zur Umlaufrichtung R der Anströmorgane 301.

Das Anströmorgan 301 enthält im Weiteren eine Schnittstellenwand 308. Die Schnittstellenwand 308 ist im Bereich des ersten Wandendabschnittes 306 quer zur Anströmwand 302 und quer zu den Querwänden 304a, 304b angeordnet und mit den genannten Wänden 302, 304a, 304b verbunden.

An der Schnittstellenwand 308 sind zwei seitlich ausser mittig angeordnete Führungsmittel 309a, 309b sowie Verbindungsmittel 311, 312 zum gegenseitigen Verbinden gleichartig ausgebildeter Anströmorgane 301 angebracht. Die Führungsmittel 309a, 309b umfassen zwei seitlich von der Anströmwand 302 angeordnete Führungsrollen 310, welche über Rollenachsen 325 mit dem Anströmorgan 301 verbunden sind.

Die Verbindungsmittel umfassen ein gabelförmiges Verbindungselement 312 und ein diesem entlang der Bewegungsrichtung R gegenüber liegenden Verbindungskörper 311, welche beide mit entsprechenden Durchbrüchen zur Aufnahme der Rollenachse der Führungsrollen 310 versehen sind. Die Führungs- 309a, 309b und Verbindungsmittel sind funktionell gekoppelt.

Zur Herstellung der zusammenhängenden, kettenartigen Antriebsanordnung 314 werden die beiden seitlich angeordneten Verbindungskörper 311 eines ersten Anströmorgans 301 in die Öffnung zwischen den Gabellaschen korrespondierender, gabelförmiger Verbindungselemente 312 eines benachbarten Anströmorgans 301 eingeführt. Anschliessend werden die Rollenachse sowohl durch die Durchbrüche in den Gabellaschen als auch im Verbindungskörper 311 geschoben, wodurch die Anströmorgane 301 miteinander verbunden werden. Im Weiteren wird auch die Führungsrolle 310 über die Rollenachse 325 am Anströmorgan 301 bzw. an der Antriebsanordnung 314 befestigt (siehe auch Figur 2b).

Die Anströmelemente 301 sind im Lastabschnitt 318, das heisst entlang des Wasserführungskanals 317, über ihre Führungsrollen 310 in Führungsschienen 322 einer Führungseinrichtung zwangsgeführt. Die Führungsschienen 322 sind auf Höhe der Kanalöffnung beidseits im Bereich der seitlichen Kanalwände angeordnet (siehe auch Figur 9a, 9b, 9c).

Die Figur 14 zeigt einen Ausschnitt aus einer erfindungsgemässen Anlage 300 zur Erzeugung elektrischer Energie aus Wasserkraft der den oberen Einlaufbereich wiedergibt. Über einen Zuführkanal 324 wird Wasser mit einer Anströmrichtung W einem in einer schiefen Ebene angeordneten Wasserführungskanal 317 zugeführt. Der Wasserführungskanal 317 weist einen U-förmigen Profilquerschnitt auf und umfasst einen Kanalboden sowie zwei voneinander beabstandete seitliche Kanalwände (siehe auch Figur 9a, 9b und 9c).

Im Einlaufbereich über dem Wasserführungskanal 317 ist ein oberes Umlenkorgan 315 in Ausführung eines Antriebsrades angeordnet. Das Umlenkorgan lenkt die Anströmorgane 301 aus einem Rückführabschnitt 319 in einen parallel zum Wasserführungskanal 317 verlaufenden Lastabschnitt 318 um.

Das Umlenkorgan 315 ist so angeordnet, dass die Anströmorgane 301 im Einlaufbereich zum Wasserführungskanal 317 in den Wasserstrom eintauchen und gleichzeitig in den Wasserführungskanal 317 hinein geführt werden. Das Umlenkorgan 315 ist mit einem Stromerzeugungsgenerator 316 verbunden, welcher kinetische Energie aus der Drehbewegung der Antriebsanordnung 314 am Umlenkorgan 315 abnimmt und in elektrische Energie umwandelt.

Beim Einführen der Anströmorgane 301 in den Wasserführungskanal 317 bilden diese zusammen mit dem Wasserführungskanal 317 Wasseraufnahmeabteile aus.

Der zweite, freie Wandendabschnitt 306 taucht im Einlaufbereich aufgrund der erfindungsgemässen Geometrie der Anströmwand 302 zuerst mit seiner freien Eintauchkante 323 in den Wasserstrom ein (siehe Figur 15). Der zweite, freie Wandendabschnitt 306 ist quer zur Strömungsrichtung W des Wassers orientiert und wirkt daher wie eine in den Wasserstrom eintauchende Schneide.

Das der Anströmwand 302 voran fliessende Wasser wird beim Eintauchen des Anströmorgans 301 in einem vorauslaufenden Wasseraufnahmeabteil zurückgehalten. Das die Anströmwand 302 anströmende Wasser wird dahingegen in einem nachlaufenden Wasseraufnahmeabteil zurückgehalten. Die Anströmwand 302 bildet die Trennwand zwischen vorauslaufendem und nachlaufendem Wasseraufnahmeabteil aus.

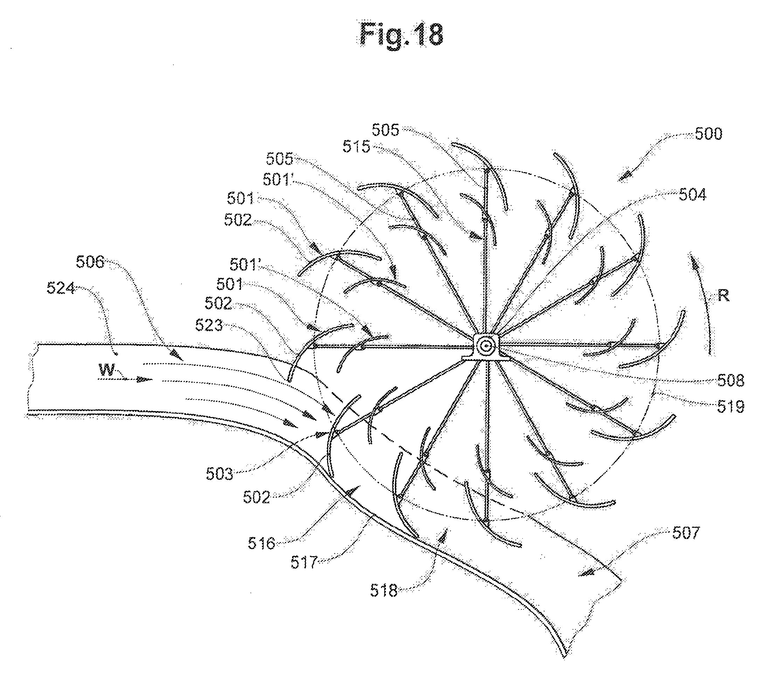

Die Anlage 500 gemäss Figur 18 enthält ein mittelschlächtiges Antriebsrad 515 mit, entlang seines Umfangs radial aussen angeordneten, erfindungsgemässen Anströmorganen 501, 501'. Das Antriebsrad 515 ist als Speichenrad ausgebildet, welches von einer Antriebsnabe 504 sternförmig nach aussen geführte Speichen 505 enthält. Die Anströmorgane 501 sind radial aussen an den Speichen 505 angebracht.

Das Antriebsrad 515 ist über eine in der Antriebsnabe 504 geführte Drehachse 508 drehbar gelagert. Über einen mit der Drehachse 508 gekoppelten Generator (nicht gezeigt) kann nun aus dem durch den Wasserstrom angetriebenen Antriebsrad 515 elektrische Energie erzeugt werden.

Das Antriebsrad 515 enthält im Weiteren ebenfalls an den Speichen 505, jedoch radial innen liegend vor den Anströmorganen 501 angeordnete Zweitanströmorgane 501'. Die Zweitanströmorgane 501' weisen dieselbe Geometrie wie die Anströmorgane 501 auf. Sie sind jedoch kleiner ausgebildet. Die Zweitanströmorgane 501' sind fakultativ.

Das Anströmorgan 501 enthält eine schaufelförmige Anströmwand 502, welche entlang einer parallel zur Umlaufrichtung R verlaufenden Querschnittsebene betrachtet gekrümmt ausgebildet ist. Die Anströmwand 502 weist eine Anströmseite 503 auf, welche im Lastabschnitt 518 vom Wasser angeströmt wird. Ferner weist die Anströmwand 502 eine freie Eintauchkante 523, welche vorlaufend ist und im Einlaufbereich 506 als erstes in den Wasserstrom eintaucht.

Die Anströmwand 502 ist gegen die zur Anströmseite 503 hin gerichtete Anströmrichtung W gewölbt ausgebildet. Das heisst, der Mittelpunkt des Krümmungsradius bzw. die Mittelpunkte der Krümmungsradien der Anströmwand 502 sind dem Anströmorgan 501 vorlaufend angeordnet.

Dank der erfindungsgemässen Geometrie des Anströmorgans 501 schlägt das Anströmorgan 501 beim Eintauchen in den Wasserstrom nicht auf der Wasseroberfläche auf, sondern schneidet vielmehr mit der vorlaufenden Eintauchkante 523 in den Wasserstrom hinein.

Die Anlage 500 enthält ferner einen entlang eines Lastabschnittes 518 des Antriebsrades 515 angeordneten Wasserführungskanal 517, welcher von einem höher liegenden Einlaufbereich 506 zu einem tiefer liegenden Auslassbereich 507 führt. Der Wasserführungskanal 517 weist einen Kanalboden sowie zwei seitliche Kanalwände auf. Die Anströmorgane 501 tauchen in einem höher liegenden Einlaufbereich 506 in den Wasserführungskanal 517 ein. Dabei bilden zwei unmittelbar hintereinander folgende Anströmorgane 501 zusammen mit dem Wasserführungskanal 517 jeweils ein nach oben offenes Wasseraufnahmeabteil 516 aus.

Das Wasser strömt nun im Einlaufbereich 506 in den Wasserführungskanal 517 ein und wird von den sich bildenden Wasseraufnahmeabteilen 516 aufgenommen. Durch die vom fliessenden Wasser mitgeführte kinetische Energie wird das Antriebsrad 515 über die Anströmorgane 501 angetrieben. Das Wasser wird auf diese Weise in den Wasseraufnahmeabteilen 516 zum tiefer liegenden Auslassbereich 507 geführt und dort wieder aus den Wasseraufnahmeabteilen 516 entlassen.

Die Anströmorgane 501 tauchen im Auslassbereich 507 aus dem Wasserstrom aus und werden im so genannten Rückführabschnitt 519 wieder zum Einlaufbereich 506 zurückgeführt. Der Einlaufbereich 506 kann auf Höhe der Antriebsnabe 504 oder tiefer liegen.

## Patentansprüche

1. Anströmorgan (301, 501) für eine Anlage (300, 500) zur Gewinnung von elektrischer Energie aus Wasserkraft, enthaltend eine Anströmwand (302, 502) mit einer Anströmseite (303, 503) sowie enthaltend eine, die Anströmwand (302, 502) begrenzende, freie Eintauchkante (323, 523), wobei die Anströmwand (302, 502) in einer Querschnittesebene (E) quer zur freien Eintauchkante (323, 523) betrachtet eine Krümmung aufweist, wobei die Krümmung derart ausgebildet ist, dass die Anströmwand (302, 502) gegen eine zur Anströmseite (303, 503) hin gerichtete Anströmrichtung (W) gewölbt ausgebildet ist und die freie Eintauchkante (323, 523) in Anströmrichtung (W) zur Anströmseite (303, 503) hin betrachtet der Anströmwand (302, 502) vorlaufend angeordnet ist, und die Anströmwand (302) eine Breitenausdehnung (D1) und eine Höhenausdehnung (D3) aufweist
wobei das Anströmorgan Führungsmittel (309a, 309b) zur Führung des Anströmorgans (301) entlang einer Führungseinrichtung (322) enthält,
**dadurch gekennzeichnet, dass** die Anströmwand (302) einen, der freien Eintauchkante (323) gegenüber liegenden führungsseitigen Wandendabschnitt (307) enthält, und das Anströmorgan (301) eine an den genannten führungsseitigen Wandendabschnitt (307) der Anströmwand (302) quer zu dieser anschliessende und sich über die Breitenausdehnung (D1) der Anströmwand (302) erstreckende Schnittstellenwand (308) enthält.

2. Anströmorgan nach Anspruch 1, **dadurch gekennzeichnet, dass** die Krümmung der Anströmwand (302) in der Querschnittesebene (E) betrachtet durch einen Polygonzug aus mindestens zwei ebenen, in einem Winkel aufeinander treffenden Wandabschnitten gebildet ist.

3. Anströmorgan nach einem der Ansprüche 1 bis 2, **dadurch gekennzeichnet, dass** die Krümmung der Anströmwand (502) in der Querschnittesebene (E) betrachtet durch ein oder mehrere zusammengesetzte Kreisbogenstücke mit jeweils einem Bogenradius gebildet ist, wobei die Mittelpunkte der Bogenradien in Anströmrichtung (W) zur Anströmseite (503) hin betrachtet der Anströmwand (502) vorlaufend angeordnet sind.

4. Anströmorgan nach einem der Ansprüche 1 bis 3, **dadurch gekennzeichnet, dass** das Anströmorgan (301), vorzugsweise auf der Anströmseite (303), wenigstens ein quer zur Anströmwand (302) angeordnetes und mit dieser verbundenes Versteifungselement (304a, 304b, 305) enthält.

5. Anströmorgan nach einem der Ansprüche 1 bis 4, **dadurch gekennzeichnet, dass** die Führungsmittel (309a, 309b) an der Schnittstellenwand (308) angeordnet sind.

6. Anströmorgan nach einem der Ansprüche 1 bis 5, **dadurch gekennzeichnet, dass** das Anströmorgan (301) Verbindungsmittel (311, 312) zum Verbinden mehrerer Anströmorgane (301) hintereinander zu einer kettenartigen Antriebsanordnung (314) enthält.

7. Anströmorgan nach Anspruch 6, **dadurch gekennzeichnet, dass** die Führungsmittel (309a, 309b) Führungsrollen (310) umfassen, welche an den Verbindungsmittel (311, 312) angeordnet und jeweils über eine Achse mit diesen verbunden sind, und die Achse ein Verbindungselement zwischen zwei Anströmorganen (301) ausbildet.

8. Anlage (300, 500) zur Gewinnung von elektrischer Energie aus Wasserkraft, enthaltend eine Mehrzahl hintereinander angeordneter und entlang einer Umlaufrichtung (R) in einer geschlossenen Umlaufbahn umlaufend geführten Anströmorgane (301, 501) nach einem der Ansprüche 1 bis 7, welche durch Wasserkraft in Umlaufrichtung (R) antreibbar sind, ferner enthaltend einen entlang eines Gefälles verlaufenden Lastabschnitt (318, 418), wobei die Anströmorgane (301) entlang des Lastabschnittes (318, 418) in einem Wasserführungskanal (317, 517) geführt sind.

9. Anlage nach Anspruch 8, **dadurch gekennzeichnet, dass** die Anströmorgane (301) eine um wenigstens ein Umlenkorgan (315), vorzugsweise um wenigstens zwei voneinander beabstandete Umlenkorgane (315), geführte Antriebsanordnung (314) ausbilden.

10. Anlage nach Anspruch 8, **dadurch gekennzeichnet, dass** die Anströmorgane (501) Teil eines Antriebsrades (515) sind.

11. Anlage nach einem der Ansprüche 8 bis 10, **dadurch gekennzeichnet, dass** das Anströmorgan (301, 501) derart ausgebildet und geführt ist, dass die Anströmwand (302, 502) im Einlaufbereich mit ihrer freien Eintauchkante (323, 523) voran in den Wasserstrom eintaucht.

12. Anlage nach einem der Ansprüche 8 bis 11, **dadurch gekennzeichnet, dass** die Anlage (300) entlang des Lastabschnitts (318) eine Führungseinrichtung (322) enthält, in welcher Führungsmittel (309a, 309b) der Anströmorgane (301) verschiebbar angeordnet sind, derart dass die Anströmorgane (301) wenigstens im Bereich des Lastabschnitts (318) führbar sind.

13. Anlage nach einem der Ansprüche 8 bis 12, **dadurch gekennzeichnet, dass** der Lastabschnitt (318) und der Wasserführungskanal (317) entlang einer schiefen Ebene verlaufen.

14. Anlage nach einem der Ansprüche 8 bis 13, **dadurch gekennzeichnet, dass** der Wasserführungskanal (317, 517) mindestens abschnittsweise parallel zur Umlaufbahn der Anströmorgane (301, 501) verläuft.

## Claims

1. An incident flow organ (301, 501) for an installation (300, 500) for obtaining electrical energy from hydropower, comprising an incident flow wall (302, 502) that comprises an incident flow side (303, 503), and comprising a free immersion edge (323, 523) that delimits the incident flow wall (302, 502), wherein the incident flow wall (302, 502) has a curvature, as viewed in a cross-sectional plane (E) across the free immersion edge (323, 523),
wherein the curvature is realized in such a manner that the incident flow wall (302, 502) is curved against an incident flow direction (W) directed toward the incident flow side (303, 503),
and the free immersion edge (323, 523) is disposed forward of the incident flow wall (302, 502), as viewed toward the incident flow side (303, 503) in the direction of incident flow (W),
and the incident flow wall (302) has a width extent (D1) and a height extent (D3),
wherein the incident flow organ comprises guide means (309a, 309b) for guiding the incident flow organ (301) along a guide device (322),
**characterized in that**
the incident flow wall (302) comprises a wall end portion (307), on the guide side, that is opposite the free immersion edge (323),
and the incident flow organ (301) comprises an interface wall (308) that transversely adjoins the mentioned second wall end portion (307) of the incident flow wall (302) on the guide side and extends over the width extent (D1) of the incident flow wall (302).

2. The incident flow organ as claimed in claim 1, **characterized in that** the curvature of the incident flow wall (302), as viewed in the cross-sectional plane (E), is formed by a polygon curve composed of at least two planar wall portions that meet together at an angle.

3. The incident flow organ as claimed in any one of claims 1 to 2, **characterized in that** the curvature of the incident flow wall (502), as viewed in the cross-sectional plane (E), is formed by one or more circular arc portions that are combined together and that each have an arc radius, wherein the mid-points of the arc radii are disposed forward of the incident flow wall (502), as viewed toward the incident flow side (503) in the direction of incident flow (W).

4. The incident flow organ as claimed in any one of claims 1 to 3, **characterized in that** the incident flow organ (301) comprises, preferably on the incident flow side (303), at least one stiffening element (304a, 304b, 305) disposed transversely in relation to the incident flow wall (302) and connected to the latter.

5. The incident flow organ as claimed in any one of claims 1 to 4, **characterized in that** the guide means (309a, 309b) are disposed on the interface wall (308).

6. The incident flow organ as claimed in any one of claims 1 to 5, **characterized in that** the incident flow organ (301) comprises connecting means (311, 312), for connecting a plurality of incident flow organs (301) in succession to form a chain-type drive arrangement (314).

7. The incident flow organ as claimed in claim 6, **characterized in that** the guide means (309a, 309b) comprise guide rollers (310) that are disposed on the connecting means (311, 312) and that are each connected to the latter by means of an axle, and the axle constitutes a connecting element between two incident flow organs (301).

8. An installation (300, 500) for obtaining electrical energy from hydropower, comprising a plurality of incident flow organs (301, 501), as claimed in any one of claims 1 to 7, that are disposed in succession and guided in a revolving manner in a closed continuous path along a direction of revolution (R), and that can be driven in the direction of revolution (R) by hydropower, further comprising a load portion (318, 418) extending along a gradient, wherein the incident flow organs (301) are guided in a water guide channel (317, 517), along the load portion (318, 418).

9. The installation as claimed in claim 8, **characterized in that** the incident flow organs (301) constitute a drive arrangement (314) that is guided around at least one turnaround organ (315), preferably around at least two turnaround organs (315) that are spaced apart from each other.

10. The installation as claimed in claim 8, **characterized in that** the incident flow organs (501) are part of a drive wheel (515).

11. The installation as claimed in any one of claims 8 to 10, **characterized in that** the incident flow organ (301, 501) is designed and guided in such a manner that, in the inlet region, the incident flow wall (302, 502) is immersed, with its free immersion edge (323, 523) foremost, in the flow of water.

12. The installation as claimed in any one of claims 8 to 11, **characterized in that**, along the load portion (318), the installation (300) comprises a guide device (322), in which guide means (309a, 309b) of the incident flow organs (301) are disposed so as to be displaceable, in such a manner that the incident flow organs (301) can be guided, at least in the region of the load portion (318).

13. The installation as claimed in any one of claims 8 to 12, **characterized in that** the load portion (318) and the water guide channel (317) extend along an oblique plane.

14. The installation as claimed in any one of claims 8 to 13, **characterized in that** the water guide channel (317, 517) is at least portionally parallel to the continuous path of the incident flow organs (301, 501).

## Revendications

1. Organe d'entrée de flux (301, 501) pour une installation (300, 500) destinée à obtenir de l'énergie électrique à partir d'énergie hydraulique, comportant une paroi d'entrée de flux (302, 502) présentant un côté d'entrée de flux (303, 503) et comportant un bord immergé libre (323, 523) délimitant la paroi d'entrée de flux (302, 502), dans lequel la paroi d'entrée de flux (302, 502) présente, dans un plan en coupe transversale (E) observé transversalement au bord immergé libre (323, 523) une courbure, dans lequel la courbure est réalisée de manière à ce que la paroi d'entrée de flux (302, 502) soit réalisée de manière bombée en sens opposé à une direction d'entrée de flux (W) vers le côté d'entrée de flux (303, 503) et le bord immergé libre (323, 523) est disposé en amont de la paroi d'entrée de flux (302, 502) lorsqu'il est observé dans la direction d'entrée de flux (W) vers le côté d'entrée de flux (303, 503), et la paroi d'entrée de flux (302) présente un évidement en largeur (D1) et un évidement en hauteur (D3),
dans lequel l'organe d'entrée de flux comporte des moyens de guidage (309a, 309b) destinés à guider l'organe d'entrée de flux (301) le long d'un dispositif de guidage (322),
**caractérisé en ce que**
la paroi d'entrée de flux (302) comporte une section de paroi (307) côté guidage située à l'opposé du bord immergé libre (323),
et l'organe d'entrée de flux (301) comporte une paroi d'interface (308) reliée à ladite section de paroi côté guidage (307) de la paroi d'entrée de flux (302) transversalement à celle-ci et s'étendant sur l'évidement en largeur (D1) de la paroi d'entrée de flux (302) .

2. Organe d'entrée de flux selon la revendication 1, **caractérisé en ce que** la courbure de la paroi d'entrée de flux (302), lorsqu'on l'observe dans un plan transversal (E), est formée par un tracé polygonal constitué d'au moins deux sections de paroi planes formant entre elles un certain angle.

3. Organe d'entrée de flux selon l'une quelconque des revendications 1 et 2, **caractérisé en ce que** la courbure de la paroi d'entrée de flux (502), observée dans le plan de section transversale (E), est formée par une ou plusieurs parties d'arcs de cercle composites ayant chacun un rayon de courbure, dans lequel les centres des rayons de courbure sont disposés dans la direction d'entrée de flux (W) vers le côté d'entrée de flux (503) en amont de la paroi d'entrée de flux (502).

4. Organe d'entrée de flux selon l'une quelconque des revendications 1 à 3, **caractérisé en ce que** l'organe d'entrée de flux (301) comporte, de préférence du côté d'entrée de flux (303), au moins un élément de renforcement (304a, 304b, 305) disposé transversalement à la paroi d'entrée de flux (302) et relié à celle-ci.

5. Organe d'entrée de flux selon l'une quelconque des revendications 1 à 4, **caractérisé en ce que** les moyens de guidage (309a, 309b) sont disposés sur la paroi d'interface (308).

6. Organe d'entrée de flux selon l'une quelconque des revendications 1 à 5, **caractérisé en ce que** l'organe d'entrée de flux (301) comporte des moyens de liaison (311, 312) destinés à relier plusieurs organes d'entrée de flux (301) consécutifs en un système d'entraînement en forme de chaîne (314).

7. Organe d'entrée de flux selon la revendication 6, **caractérisé en ce que** les moyens de guidage (309a, 309b) comprennent des rouleaux de guidage (310) qui sont disposés sur les moyens de liaison (311, 312) et qui sont respectivement reliés à ceux-ci par l'intermédiaire d'un axe et **en ce que** l'axe forme un élément de liaison entre deux organes d'entrée de flux (301) .

8. Installation (300, 500) d'obtention d'énergie électrique à partir d'énergie hydraulique, comportant une pluralité d'organes d'entrée de flux (301, 501) selon l'une quelconque des revendications 1 à 7, disposés consécutivement et guidés le long d'une direction circonférentielle (R), et circulant sur un trajet circonférentiel fermé, qui peuvent être entraînés par l'énergie hydraulique dans la direction circonférentielle (R), comportant en outre une section de charge (318, 418) s'étendant le long d'une pente, dans lequel les organes d'entrée de flux (301) sont guidés le long de la section de charge (318, 418) dans un canal d'amenée d'eau (317, 517).

9. Installation selon la revendication 8, **caractérisée en ce que** les organes d'entrée de flux (301) forment un système d'entraînement (314) guidé autour d'au moins un organe de déviation (315), de préférence autour d'au moins deux organes de déviation (315) espacés l'un de l'autre.

10. Installation selon la revendication 8, **caractérisée en ce que** les organes d'entrée de flux (501) font partie d'une roue d'entraînement (515).

11. Installation selon l'une quelconque des revendications 8 à 10, **caractérisée en ce que** l'organe d'entrée de flux (301, 501) est réalisé et guidé de manière à ce que la paroi d'entrée de flux (302, 502) plonge en avance dans le flux d'eau dans la région d'entrée par l'intermédiaire de son bord plongeant libre (323, 523).

12. Installation selon l'une quelconque des revendications 8 à 11, **caractérisée en ce que** l'installation (300) comporte, le long de la section de charge (318), un dispositif de guidage (322) dans lequel des moyens de guidage (309a, 309b) des organes d'entrée de flux (301) sont disposés de manière à pouvoir être déplacés afin que les organes d'entrée de flux (301) puissent être guidés au moins dans la région de la section de charge (318).

13. Installation selon l'une quelconque des revendications 8 à 12, **caractérisée en ce que** la section de charge (318) et le canal d'amenée d'eau (317) s'étendent le long d'un plan incliné.

14. Installation selon l'une quelconque des revendications 8 à 13, **caractérisée en ce que** le canal d'amenée d'eau (317, 517) s'étend, au moins par sections, parallèlement au trajet circonférentiel des organes d'entrée de flux (301, 501).
